# EUROPÄISCHE PATENTSCHRIFT

(11) **EP 4 238 210 B1**
(45) Veröffentlichungstag und Bekanntmachung des Hinweises auf die Patenterteilung: **28.05.2025**
(21) Anmeldenummer: 21802299.4
(22) Anmeldetag: 28.10.2021
(51) Int. Cl.: H02M 3/335, H02M 1/00, H02J 7/00, H02J 7/34

(54) **SCHALTNETZTEIL ZUR SYMMETRIERUNG EINES ZWISCHENKREISES**
SWITCHING POWER SUPPLY FOR BALANCING A DC LINK
CONVERTISSEUR CONTINU-CONTINU POUR LA SYMÉTRISATION D'UN CIRCUIT INTERMÉDIAIRE

(30) Priorität: 29.10.2020 EP 20204747
(43) Veröffentlichungstag der Anmeldung: 06.09.2023
(73) Patentinhaber: FRONIUS INTERNATIONAL GmbH, 4643 Pettenbach (AT)
(72) Erfinder: MAGERL, Christian, 4600 Wels-Thalheim (AT); OFENBERGER, Tobias, 4600 Wels-Thalheim (AT)
(74) Vertreter: Patentanwälte Pinter & Weiss OG
(86) Internationale Anmeldenummer: PCT/EP2021/080034
(87) Internationale Veröffentlichungsnummer: WO 2022/090415

(56) Entgegenhaltungen:
- WO-A1-2018/134827
- CH-A2- 712 011
- CN-A- 107 634 655
- CN-A- 107 769 389
- CN-U- 208 638 071
- DE-A1- 102011 119 904
- DE-A1- 4 422 409
- US-A1- 2014 153 294

## Beschreibung

Die gegenständliche Erfindung betrifft ein Schaltnetzteil zur Symmetrierung einer Mehrzahl von an jeweils zwischen einem Eingangspolpaar des Schaltnetzteils an einem Zwischenkreiskondensator eines Zwischenkreises anlegbaren Zwischenkreisspannungen, wobei das Schaltnetzteil ausgestaltet ist eine Ausgangsgleichspannung an einem zwischen einem ersten Ausgangspol und einem zweiten Ausgangspol des Schaltnetzteils verbundenen Ausgangskondensator des Schaltnetzteils auszugeben. Weiters betrifft die gegenständliche Erfindung ein Verfahren zur Symmetrierung einer Mehrzahl an Zwischenkreisspannungen, welche jeweils an einem zwischen einem zugehörigen Eingangspolpaar eines Schaltnetzteils angeordneten Zwischenkreiskondensator eines Zwischenkreises anliegen, wobei eine Ausgangsspannung an einem Ausgangskondensator des Schaltnetzteils zwischen einem ersten Ausgangspol und einem zweiten Ausgangspol des Schaltnetzteils ausgegeben wird und eine Anordnung aus einer leistungselektronischen Vorrichtung mit einer Mehrzahl an Zwischenkreiskondensatoren und einem Schaltnetzteil zur Symmetrierung von Zwischenkreisspannungen an der Mehrzahl an Zwischenkreiskondensatoren.

Es sind diverse leistungselektronische Vorrichtungen, beispielsweise Wechselrichter, Schweißgeräte, Ladegeräte etc. bekannt, welche einen Zwischenkreis mit einer Mehrzahl an Zwischenkreiskondensatoren aufweisen, wobei an den Zwischenkreiskondensatoren jeweils Zwischenkreisspannungen anliegen. Aufgrund von unsymmetrischen Belastungen der Zwischenkreiskondensatoren durch eine zugehörige leistungselektronische Vorrichtung und/oder durch parasitäre Leckströme kann der Fall eintreten, dass die Zwischenkreisspannungen unsymmetrisch werden, d.h. zueinander unterschiedliche Werte einnehmen. Es ist wünschenswert diese Zwischenkreisspannungen zu symmetrieren, d.h. auszugleichen. Auch kann es erwünscht sein, Zwischenkreisspannungen verschiedener leistungselektronischer Vorrichtungen zu symmetrieren.

Um Unsymmetrien zwischen Zwischenkreisspannungen auszubalancieren, können Schaltnetzteile vorgesehen sein, welche ausgestaltet sind, bevorzugt Energie aus Zwischenkreiskondensatoren mit einer höherer Zwischenkreisspannung zu entnehmen und in eine Last einzuspeisen. Die EP 2 826 126 B1 beispielsweise beschreibt einen Wechselrichter umfassend mehrere Zwischenkreiskondensatoren. Es sind Hochsetzsteller vorgesehen, welche Energie erst aus den vorhandenen Zwischenkreiskondensatoren in einen bestimmten Zwischenkreiskondensator verschieben und gewissermaßen zu bündeln. Dieser bestimmte Zwischenkreiskondensator ist wiederum mit der Eingangsseite eines Schaltnetzteils verbunden, wobei die Ausgangsseite des Schaltnetzteils mit einer Last verbunden ist. Somit wird die Energie des Zwischenkreiskondensators über das Schaltnetzteil an die Last abgegeben.

Bekannte Schaltnetzteile sind jedoch nur zu einer Symmetrierung der Zwischenkreisspannungen der eingangsseitig verbundenen Zwischenkreiskondensatoren in der Lage, wenn die Schaltnetzteile ausgangsseitig mit einer Last verbunden sind, um die aus den Zwischenkreiskondensatoren entnommene Energie an die Last abzuführen.

Daneben sind aus dem Stand der Technik sogenannte "Balancing-Konzepte" bekannt, in denen teilweise auch mehrere Energiespeicher balanciert werden. So werden in der DE 102011119904 A1 in Serie geschaltete Batteriezellen balanciert, die mit induktiv gekoppelten Spulen verbunden sind, und keine Zwischenkreiskondensatoren, deren Anschlüsse induktiv entkoppelt sind. Die Anwendbarkeit der DE 10 2011 119 904 A1 zur Symmetrierung von induktiv entkoppelten Zwischenkreiskondensatoren ist dadurch stark einschränkt. Ähnliches gilt für die Schriften CH 712 011 A2, CN 107 634 655 A, WO 2018/134827 A1 oder CN 208 638 071 U, die zwar Schaltnetzteile zum Gegenstand haben, mögliche, mit einer Symmetrierung von Zwischenkreiskondensatoren einhergehende Probleme aber nur unzureichend thematisieren.

Es ist daher eine Aufgabe der gegenständlichen Erfindung eine verbesserte Symmetrierschaltung für die Zwischenkreiskondensatoren eines Zwischenkreises anzugeben.

Diese Aufgabe wird erfindungsgemäß durch ein Schaltnetzteil mit den Merkmalen des unabhängigen Anspruchs 1 gelöst. Dies beschreibt ein Schaltnetzteil zur Symmetrierung von einer Mehrzahl an Zwischenkreisspannungen, welche jeweils an Zwischenkreiskondensatoren eines Zwischenkreises anlegbar sind.

Weiters wird die Aufgabe durch ein Verfahren gemäß unabhängigem Anspruch 7 gelöst.

Die Symmetrierung der Zwischenkreisspannungen an den Zwischenkreiskondensatoren erfolgt somit auf passive Weise. Da im Schaltnetzteil auf eine Ausgangsdiode, sowie auf mit den Primärwicklungen seriell verbundene Dioden verzichtet wird, ist auch ein negativer Strom durch die Primärwicklungen, sowie durch die Sekundärwicklungen der Transformatoren möglich. Damit ist neben dem Energiefluss von der Primärwicklung auf die Sekundärwicklung auch jeweils ein Energiefluss von der Sekundärwicklung in die Primärwicklung möglich. In den Schaltungsteilen ist jeweils ein Transformator vorgesehen, wobei die Transformatoren zwischen den unterschiedlichen Schaltungsteilen nicht miteinander induktiv gekoppelt sind. So ist es möglich Energie aus dem Zwischenkreiskondensator mit der höchsten Zwischenkreisspannung über den jeweiligen Schaltungsteil und dessen Transformator in den Ausgangskondensator zu laden. Weiters wird Energie vom Ausgangskondensator über den jeweiligen Schaltungsteil und dessen Transformator, in den oder die Zwischenkreiskondensator(en) der oder den geringeren Zwischenkreisspannung(en) geladen. Es ist somit keine mit den Ausgangsanschlüssen (erster und zweiter Ausgangspol) verbundene Last erforderlich, an welche die aus dem Zwischenkondensator mit der höchsten Zwischenkreisspannung entnommene Energie zur Symmetrierung der Zwischenkreisspannungen abgeführt wird. Ist jedoch eine Last mit den Ausgangsanschlüssen verbunden, so kann natürlich Energie vom Zwischenkreiskondensator mit der höchsten Zwischenkreisspannung Energie an die Last abgegeben werden. Bei hohem lastseitigem Energiebedarf kann auch zusätzlich Energie von Zwischenkreiskondensatoren mit geringerer Zwischenkreisspannung an die Last abgegeben werden. Bei geringem lastseitigem Energiebedarf kann vom Zwischenkreiskondensator mit der höchsten Zwischenkreisspannung Energie an die Last und auch an den Zwischenkreiskondensator mit der geringsten Zwischenkreisspannung abgegeben werden. Es kann bei Vorhandensein von zumindest drei Zwischenkreisspannungen an zumindest drei Zwischenkreiskondensatoren natürlich auch Energie von einem oder mehreren Zwischenkreiskondensatoren mit einer Zwischenkreisspannung, die zwar nicht die höchste, jedoch auch nicht die niedrigste ist, auf einen oder mehrere Zwischenkreiskondensatoren mit geringerer Zwischenkreisspannung und/oder an die Last abgegeben werden.

Vorzugsweise sind die Transformatoren der Schaltungsteile identischer Bauart, wobei auch die beiden Schaltungsteile gänzlich identisch aufgebaut sein können. Sind die Transformatoren identischer Bauart so wird die Zwischenkreisspannung aller Schaltnetzteile auf eine identische Spannungshöhe ausgeglichen. Unterscheiden sich die Wicklungsverhältnisse und/oder Übersetzungsverhältnis der Transformatoren, so wird jede Zwischenkreisspannung jeweils auf die durch die Wicklungsverhältnisse und/oder Übersetzungsverhältnis eingestellte Spannungshöhe ausgeglichen.

Erfindungsgemäß ist jeweils ein erster Anschluss der Sekundärwicklungen der Transformatoren über einen Symmetrierschalter mit dem ersten Ausgangspol verbunden sein und jeweils ein zweiter Anschluss der Sekundärwicklungen der Transformatoren mit dem zweiten Ausgangspol verbunden sein, wobei eine Steuereinheit vorgesehen ist, die ausgestaltet ist, die Symmetrierschalter anzusteuern, um Energie vom Eingangspolpaar, aufweisend die größte Zwischenkreisspannung über den zugehörigen Transformator auf die Ausgangskapazität und von der Ausgangskapazität auf die anderen Eingangspolpaare umzuladen. Die Verwendung der Symmetrierschalter erlaubt einen Verzicht auf Symmetrierdioden, womit auch negative Ströme möglich sind.

Vorzugsweise umfasst das Schaltnetzteil einen ersten Schaltungsteil der Mehrzahl von Schaltungsteilen mit einem ersten Transformator der Mehrzahl von in einem Schaltungsteil vorgesehenen Transformatoren und einem ersten Eingangspolpaar der Mehrzahl von Eingangspolpaaren sowie einen zweiten Schaltungsteil der Mehrzahl von Schaltungsteilen mit einem zweiten Transformator der Mehrzahl von in einem Schaltungsteil vorgesehenen Transformatoren und einem zweiten Eingangspolpaar der Mehrzahl von Eingangspolpaaren, wobei der erste Schaltungsteil eingangsseitig über das erste Eingangspolpaar mit einem ersten Zwischenkreiskondensator, aufweisend eine erste Zwischenkreisspannung, verbindbar ist und der zweite Schaltungsteil eingangsseitig über das zweite Eingangspolpaar mit einem zweiten Zwischenkreiskondensator, aufweisend eine zweite Zwischenkreisspannung, verbindbar ist, wobei der erste Schaltungsteil ausgestaltet ist, Energie vom ersten Zwischenkreiskondensator in eine Primärwicklung des ersten Transformators und umgekehrt zu laden und wobei der zweite Schaltungsteil ausgestaltet ist, Energie vom zweiten Zwischenkreiskondensator in eine Primärwicklung des zweiten Transformators und umgekehrt zu laden, wobei eine Sekundärwicklung des ersten Transformators mit dem Ausgangskondensator verbunden ist sowie eine Sekundärwicklung des zweiten Transformators mit dem Ausgangskondensator verbunden sind, um bei einer ersten Zwischenkreisspannung größer der zweiten Zwischenkreisspannung Energie aus dem ersten Zwischenkreiskondensator über den ersten Transformator auf die Ausgangskapazität und von der Ausgangskapazität in den zweiten Zwischenkreiskondensator umzuladen, sowie bei einer zweiten Zwischenkreisspannung größer der ersten Zwischenkreisspannung Energie aus dem zweiten Zwischenkreiskondensator über den zweiten Transformator auf die Ausgangskapazität und von der Ausgangskapazität in den ersten Zwischenkreiskondensator umzuladen. Dies beschreibt ein Schaltnetzteil zur Symmetrierung von zwei Zwischenkreisspannungen an zwei Zwischenkreiskondensatoren.

Entsprechend kann eine erste Zwischenkreisspannung an einem zwischen einem ersten Eingangspolpaar angeordneten ersten Zwischenkreiskondensator und einer zweiten Zwischenkreisspannung an einem zwischen einem zweiten Eingangspolpaar angeordneten zweiten Zwischenkreiskondensator symmetriert werden, indem bei einer ersten Zwischenkreisspannung größer der zweiten Zwischenkreisspannung Energie aus dem ersten Zwischenkreiskondensator über eine erste Primärwicklung eines ersten Transformators auf eine Sekundärwicklung des ersten Transformators transformiert und von der Sekundärwicklung des ersten Transformators auf eine Ausgangskapazität umgeladen wird, sowie Energie von der Ausgangskapazität in eine Sekundärwicklung eines zweiten Transformators des Schaltnetzteils umgeladen, von der Sekundärwicklung des zweiten Transformators auf eine Primärwicklung des zweiten Transformators transformiert und von der Primärwicklung des zweiten Transformators in den zweiten Zwischenkreiskondensator umgeladen werden. Bei einer zweiten Zwischenkreisspannung größer der ersten Zwischenkreisspannung kann Energie aus dem zweiten Zwischenkreiskondensator über die Primärwicklung des zweiten Transformators auf die Sekundärwicklung des zweiten Transformators transformiert und von der Sekundärwicklung des zweiten Transformators auf die Ausgangskapazität umgeladen, sowie Energie und von der Ausgangskapazität in die Sekundärwicklung des ersten Transformators umgeladen, von der Sekundärwicklung des ersten Transformators auf die Primärwicklung des ersten Transformators transformiert und von der Primärwicklung des ersten Transformators in den ersten Zwischenkreiskondensator umgeladen werden. Dies beschreibt ein Verfahren zur Symmetrierung von zwei Zwischenkreisspannungen an zwei Zwischenkreiskondensatoren.

Vorzugsweise wird ein zwischen einem ersten Anschluss der Sekundärwicklung des ersten Transformators und dem ersten Ausgangspol angeordneter erster Symmetrierschalter angesteuert, sowie ein zwischen einem zweiten Anschluss der Sekundärwicklung (des zweiten Transformators und dem zweiten Ausgangspol angeordneter zweiter Symmetrierschalter angesteuert, um bei einer ersten Zwischenkreisspannung größer der zweiten Zwischenkreisspannung Energie aus dem ersten Zwischenkreiskondensator über den ersten Transformator auf die Ausgangskapazität umzuladen sowie Energie von der Ausgangskapazität in die zweite Zwischenkreisspannung umzuladen, und um bei einer zweiten Zwischenkreisspannung größer der ersten Zwischenkreisspannung Energie aus dem zweiten Zwischenkreiskondensator über den zweiten Transformator auf die Ausgangskapazität umzuladen sowie Energie von der Ausgangskapazität in die erste Zwischenkreisspannung umzuladen.

Es kann ein erster Anschluss der Sekundärwicklung des ersten Transformators über einen ersten Symmetrierschalter der Symmetrierschalter zum Verbinden eines jeweils ersten Anschlusses der Sekundärwicklungen der Transformatoren mit dem zweiten Ausgangspol mit dem zweiten Ausgangspol verbunden und ein erster Anschluss der Sekundärwicklung des zweiten Transformators über einen zweiten Symmetrierschalter der Symmetrierschalter zum Verbinden eines jeweils ersten Anschlusses der Sekundärwicklungen der Transformatoren (T1, T2) mit dem zweiten Ausgangspol mit dem zweiten Ausgangspol verbunden sein, wobei ein zweiter Anschluss der Sekundärwicklung des ersten Transformators und ein zweiter Anschluss der Sekundärwicklung des zweiten Transformators mit dem ersten Ausgangspol verbunden sind, sowie eine Steuereinheit vorgesehen, die ausgestaltet ist den ersten und zweiten Symmetrierschalter anzusteuern, um bei einer ersten Zwischenkreisspannung größer der zweiten Zwischenkreisspannung Energie aus dem ersten Zwischenkreiskondensator über den ersten Transformator auf die Ausgangskapazität und von der Ausgangskapazität in den zweiten Zwischenkreiskondensator umzuladen, sowie bei einer zweiten Zwischenkreisspannung größer der ersten Zwischenkreisspannung Energie aus dem zweiten Zwischenkreiskondensator über den zweiten Transformator auf die Ausgangskapazität und von der Ausgangskapazität in den ersten Zwischenkreiskondensator umzuladen. Der erste und zweite Symmetrierschalter können auch integraler Bestandteil des Schaltnetzteils oder einer bereits vorgesehenen Komponente, aber auch als eigenständige Komponente ausgeführt sein.

Vorzugsweise sind die Eingangspolpaare in Serie geschaltet. Damit teilen miteinander unmittelbar in Serie geschaltete Eingangspolpaare einen gemeinsamen Eingangspol, welcher somit, insbesondere bei zwei vorgesehenen Eingangspolpaaren, einen gemeinsamen Mittelpunkt ausbildet.

Es können jeweils RC-Schaltungen in Serie zu den Dioden geschaltet sein. Damit kann aufgrund von Streuinduktivitäten in den Primärwicklungen verbleibende Energie jeweils über die zugehörige Diode und RC-Schaltung entladen werden.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1 ein Schaltnetzteil zur belasteten Symmetrierung eines Zwischenkreises (nicht Teil des Schutzumfangs),
Fig.2 das Schaltnetzteil als Sperrwandler ausgeführt (nicht Teil des Schutzumfangs),
Fig.3 ein erfindungsgemäßes Schaltnetzteil zur Symmetrierung eines Zwischenkreises,
Fig.4 das erfindungsgemäße Schaltnetzteil als Sperrwandler ausgeführt,
Fig.5 Ströme des Schaltnetzteils zur belasteten Symmetrierung unter Last,
Fig.6 Ströme des Schaltnetzteils zur belasteten Symmetrierung ohne Last,
Fig.7 Ströme des erfindungsgemäßen Schaltnetzteils im Leerlauf,
Fig.8 Ströme des erfindungsgemäßen Schaltnetzteils unter Last.

Ein zu symmetrierender Zwischenkreis einer leistungselektronischen Anordnung umfasst einen ersten Zwischenkreiskondensator C1 und einen zweiten Zwischenkreiskondensator C2. Am ersten Zwischenkreiskondensator C1 liegt eine erste Zwischenkreisspannung UC1 und am zweiten Zwischenkreiskondensator C2 eine zweite Zwischenkreisspannung UC2 an. Sind die Werte der ersten Zwischenkreisspannung UC1 und der zweiten Zwischenkreisspannung UC2 zumindest näherungsweise identisch, so sind die Zwischenkreisspannungen UC1, UC2 symmetrisch. Unterscheiden sich die Zwischenkreisspannungen UC1, UC2, so sind sie unsymmetrisch. Wird bei vorliegender Unsymmetrie (d.h. eine Zwischenkreisspannung UC1 oder UC2 ist kleiner als die andere Zwischenkreisspannung UC1 oder UC2) die kleinere Zwischenkreisspannung UC1 oder UC2 derart erhöht, dass sich die Differenz der Zwischenkreisspannungen UC1, UC2 verringert und/oder die größere Zwischenkreisspannung UC1 oder UC2 derart verringert, dass sich die Differenz der Zwischenkreisspannungen UC1, UC2 verringert, so spricht man von einer Symmetrierung der Zwischenkreisspannungen UC1, UC2. Vorzugsweise erfolgt eine vollständige Symmetrierung, was bedeutet, dass die Differenz der Zwischenkreisspannungen UC1, UC2 auf null reduziert wird.

Zur Symmetrierung von Zwischenkreisspannungen UC1, UC2 von Zwischenkreiskondensatoren C1, C2 kann ein Schaltnetzteil SNT verwendet werden. Ein Schaltnetzteil SNT gibt ausgangsseitig an einem Ausgangskondensator Ca, welcher mit einem Ausgangspolpaar C, D verbunden ist, eine Ausgangsgleichspannung Ua aus und wird eingangsseitig durch die Zwischenkreisspannungen UC1, UC2 gespeist. Hierzu umfasst das Schaltnetzteil ein erstes Eingangspolpaar A1, B1 mit einem ersten oberen Eingangspol A1 und einem zweiten oberen Eingangspol B1, sowie ein zweites Eingangspolpaar A2, B2 mit einem ersten unteren Eingangspol A2 und einem zweiten unteren Eingangspol B2. Es wird das Eingangspolpaar A1, B1 mit dem ersten Zwischenkreiskondensator C1 verbunden und das zweite Eingangspolpaar A2, B2 mit dem zweiten Zwischenkreiskondensator C2 verbunden.

Eine bekannte Möglichkeit die Zwischenkreisspannungen UC1, UC2 zu symmetrieren ist es somit mehr Energie E1, E2 aus dem Zwischenkreiskondensator C1, C2, welcher die höhere Zwischenkreisspannung UC1, UC2 aufweist, zu entnehmen, als aus dem Zwischenkreiskondensator C1, C2, welcher die geringere Zwischenkreisspannung UC1, UC2 aufweist, und in den Ausgangskondensator Ca zu laden. Es kann je nach lastseitigem Energiebedarf und dem Ausmaß der Unsymmetrie auch ausschließlich Energie aus dem Zwischenkreiskondensator C1, C2, welcher die höhere Zwischenkreisspannung UC1, UC2 aufweist, in die Last Z umgeladen werden.

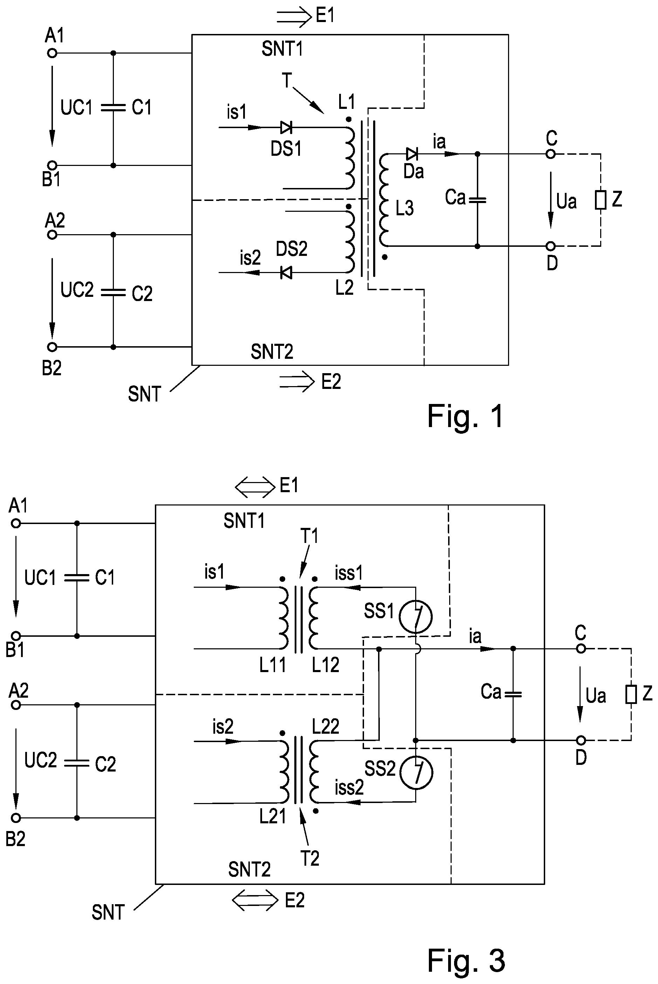

In Fig. 1 ist ein schematisches zweigeteiltes Schaltnetzteil SNT nach dem Stand der Technik dargestellt. Das Schaltnetzteil SNT umfasst somit einen ersten Schaltungsteil SNT1 und einen zweiten Schaltungsteil SNT2. Es ist im Schaltnetzteil SNT ein Transformator T vorgesehen, welcher eine erste und eine zweite Primärwicklung L1, L2, sowie eine Sekundärwicklung L3 umfasst. Die erste Primärwicklung L1 und die zweite Primärwicklung L2 sind jeweils mit der Sekundärwicklung L3 induktiv gekoppelt. Die erste Primärwicklung L1 ist dem ersten Schaltungsteil SNT1 und die zweite Primärwicklung L2 dem zweiten Schaltungsteil SNT2 zugeordnet. Die Sekundärwicklung L3 ist als Teil des Schaltnetzteils SNT beiden Schaltungsteilen SNT1, SNT2 gleichermaßen zugeordnet.

Der erste Schaltungsteil SNT1 ist ausgestaltet, Energie E1 vom ersten Zwischenkreiskondensator UC1 in die erste Primärwicklung L1 umzuladen; der zweite Schaltungsteil SNT2 ist ausgestaltet, Energie E2 vom zweiten Zwischenkreiskondensator UC2 in die zweite Primärwicklung L2 umladen. Bekannterweise wird Energie in Kondensatoren in einem elektrischen Feld gespeichert, wogegen Energie in Induktivitäten in einem magnetischen Feld gespeichert wird. Es wird somit Energie E1 vom ersten Zwischenkreiskondensator C1 in die erste Primärwicklung L1 umgeladen, indem durch die erste Zwischenkreisspannung UC1 ein erster Strom is1 in der ersten Primärwicklung L1 erzeugt wird. Analog wird Energie E2 vom zweiten Zwischenkreiskondensator C2 in die zweite Primärwicklung L2 umgeladen, indem von der zweiten Zwischenkreisspannung UC2 ein zweiter Strom is2 in der zweiten Primärwicklung L2 erzeugt wird. Der erste/zweite Strom is1, is2 in der ersten/zweiten Primärwicklung L1, L2 erzeugt jeweils ein magnetisches Feld. In diesem magnetischen Feld wird im Transformator T die Energie E1, E2 zwischengespeichert. Weiters werden im Transformator der erste und zweite Strom is1, is2 jeweils entsprechend des zugehörigen Übersetzungsverhältnisses in den Ausgangsstrom ia transformiert. Die durch den ersten und zweiten Strom is1, is2 im Transformator gespeicherte Energie E1, E2 wird vom Transformator T über die Sekundärwicklung L3 in Form des Ausgangsstroms ia ausgegeben. Der Ausgangsstrom ia lädt den zwischen dem Ausgangspolpaar C, D (umfassend einen ersten und zweiten Ausgangspol C, D) verbundenen Ausgangskondensator Ca auf eine Ausgangsspannung Ua auf, womit die Energie E1, E2 in den Ausgangskondensator Ca geladen wird. Zusammengefasst wird Energie E1, E2 vom ersten und zweiten Zwischenkreiskondensator C1, C2 über den Transformator T in den Ausgangskondensator Ca übertragen

Es ist in Serie zu einem Anschluss der Sekundärwicklung L3 eine Ausgangsdiode Da vorgesehen, womit lediglich ein positiver Ausgangsstrom ia ermöglicht wird. Entsprechend sind in Serie zur ersten Primärwicklung L1 und zur zweiten Primärwicklung L2 jeweils Symmetrierdioden DS1, DS2 vorgesehen, um auch an den Primärwicklungen L1, L2 ausschließlich einen positiven ersten und zweiten Strom is1, is2 zu erzeugen.

Liegt nun an einem der Zwischenkreiskondensatoren C1 oder C2 eine höhere Zwischenkreisspannung UC1, UC2 als am anderen Zwischenkreiskondensator C1 oder C2 vor, so muss von diesem Zwischenkreiskondensator C1 oder C2 auch mehr Energie E1, E2 in den Ausgangskondensator Ca übertragen werden, um die Zwischenkreisspannungen UC1, UC2 auszubalancieren, d.h. zu symmetrieren. Dies ist jedoch nur möglich, wenn eine Last Z mit dem Ausgangspolpaar C, D verbunden ist, um diese überschüssige Energie E1, E2 auch abzuführen.

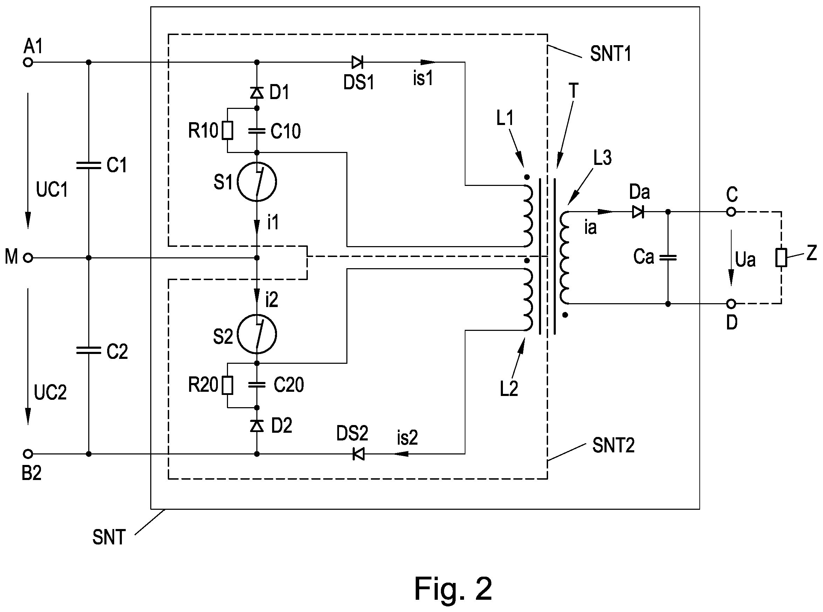

In Fig. 2 ist das schematische Schaltnetzteil SNT aus Fig. 1 als Sperrwandler ausgeführt dargestellt, welches wie das Schaltnetzteil SNT nach Fig.1 nicht unter den Anspruchsgegenstand fällt. Hier sind das erste Eingangspolpaar A1, B1 und das zweite Eingangspolpaar A2, B2 und damit auch die Zwischenkreiskondensatoren C1, C2 in Serie geschaltet. Das bedeutet, dass der zweite obere Eingangspol B1 und der erste untere Eingangspol A2 zu einem gemeinsamen Mittelpunkt M verbunden sind. Diese Serienschaltung des ersten und zweiten Zwischenkreiskondensators C1, C2 verbindet somit den ersten oberen Eingangspol A1 und den zweiten unteren Eingangspol B1, wobei der erste Zwischenkreiskondensator C1 zwischen dem ersten oberen Eingangspol A1 und dem Mittelpunkt M geschaltet ist und der zweite Zwischenkreiskondensator C1 zwischen dem Mittelpunkt M und dem zweiten unteren Eingangspol B2. Der erste Schaltungsteil SNT1 des Sperrwandlers verbindet parallel zum oberen Zwischenkreiskondensator C1 den Mittelpunkt M mit dem ersten oberen Eingangspol A1 und umfasst (vom Mittelpunkt M in Richtung des ersten oberen Eingangspols A1) eine Serienschaltung eines ersten Schalters S1, einer ersten RC-Schaltung RC1 (Parallelschaltung eines ersten Widerstands R10 und eines ersten Kondensators C10), sowie einer ersten Diode D1. Die Durchlassrichtung der ersten Diode D1 ist gegen die erste Zwischenkreisspannung UC1 geschaltet, was bedeutet, dass die Kathode der ersten Diode D1 mit dem ersten oberen Eingangspol A1 verbunden ist und die Anode der ersten Diode D1 über die erste RC-schaltung RC1 und ersten Schalter S1 mit dem Mittelpunkt M verbunden ist. Der zweite Schaltungsteil SNT2 des Sperrwandlers verbindet parallel zum zweiten Zwischenkreiskondensator C2 den zweiten unteren Eingangspol B2 mit dem Mittelpunkt M und umfasst vorteilhafterweise (vom zweiten unteren Eingangspol B2 in Richtung des Mittelpunkts M) eine Serienschaltung einer zweiten Diode D2 einer zweiten RC-Schaltung RC2 (Parallelschaltung eines zweiten Widerstands R20 und eines zweiten Kondensators C20) und eines zweiten Schalters S2. Die Durchlassrichtung der zweiten Diode D2 ist gegen die erste Zwischenkreisspannung UC1 geschaltet, was bedeutet, dass die Anode der zweiten Diode D2 mit zweiten unteren Eingangspol B2 verbunden ist und die Kathode der zweiten Diode D2 über die zweite RC-Schaltung RC2 und den zweiten Schalter S2 mit dem Mittelpunkt M verbunden ist.

Ein erster Anschluss der ersten Primärwicklung L1 ist über eine erste Symmetrierdiode DS1 mit dem ersten oberen Eingangspol A1 verbunden. Ein zweiter Anschluss der ersten Primärwicklung L1 ist mit dem Verbindungspunkt der RC-Schaltung RC1 und des ersten Schalters S1 verbunden. Ein erster Anschluss der zweiten Primärwicklung L2 ist mit dem Verbindungspunkt der zweiten RC-Schaltung RC2 und des zweiten Schalters S2 verbunden und ein zweiter Anschluss der ersten Primärwicklung L1 über eine zweite Symmetrierdiode DS2 mit dem zweiten unteren Eingangspol B2 verbunden. Die Anschlüsse der Sekundärwicklung L3 sind, wie bereits in Fig. 1 dargestellt, mit einer Serienschaltung einer Ausgangsdiode Da und eines Ausgangskondensators Ca verbunden, wobei eine Ausgangsspannung Ua am Ausgangskondensator Ca anliegt. Es wird eine zum Ausgangskondensator Ca parallel geschaltete Last Z von der Ausgangsspannung Ua versorgt.

Die erste Zwischenkreisspannung UC1 liegt somit am ersten Zwischenkreiskondensator C1 und damit zwischen dem ersten oberen Eingangspol A1 und dem Mittelpunkt M an. Der erste Schalter S1 wird von einer Steuereinheit 1 entsprechend eines vorgegebenen Tastgrads angesteuert. Während der erste Schalter S1 geschlossen ist, erzeugt die von der ersten Zwischenkreisspannung UC1 hervorgerufene Potentialdifferenz einen ersten Strom is1, welcher zwischen dem ersten oberen Eingangspol A1 und dem Mittelpunkt M über die erste Symmetrierdiode Ds1, die erste Primärwicklung L1 und den ersten Schalter S1 fließt. Der zweite Schalter S2 wird von der Steuereinheit 1 synchron zum ersten Schalter S1 angesteuert, wobei bei einem geschlossenen zweiten Schalter S2 die von der zweiten Zwischenkreisspannung UC2 hervorgerufene Potentialdifferenz einen zweiten Strom is2 erzeugt, welcher zwischen dem Mittelpunkt M und dem zweiten unteren Eingangspol B2, d.h. über den zweiten Schalter S2 die zweite Primärwicklung L2 und die zweite Symmetrierdiode Ds2, fließt. Das in der ersten und zweiten Primärwicklung L1, L2 hervorgerufene magnetische Feld wird in der Sekundärwicklung L3 induziert, womit ein Ausgangsstrom ia durch die Sekundärwicklung L3 fließt, welcher die Ausgangskapazität Ca lädt. An der Ausgangskapazität Ca liegt die Ausgangsspannung Ua an. Es wird dabei Energie E1, E2, wie oben anhand von Fig. 1 beschrieben, von den Zwischenkreiskondensatoren C1, C2 über den Transformator T in die Ausgangskapazität Ca umgeladen. Dies entspricht der Funktionsweise eines herkömmlichen Sperrwandlers mit zwei Schaltungsteilen SNT1, SNT2, wobei der erste/zweite Schaltungsteil SNT1/SNT2 eine erste/zweite Primärwicklung L1/L2 umfasst und die Sekundärwicklung L3 mit beiden Primärwicklungen L1, L2 induktiv gekoppelt ist (double flyback converter genannt).

Tritt nun eine Unsymmetrie zwischen den Zwischenkreisspannungen UC1, UC2 auf, so wird aus dem Zwischenkreiskondensator C1, C2 mit der höheren Zwischenkreisspannung UC1, UC2 mehr Energie E1, E2 entnommen als aus dem Zwischenkreiskondensator C1, C2 mit der geringeren Zwischenkreisspannung UC1, UC2 und auf die Sekundärwicklung L3 transformiert, um die Last Z zu speisen.

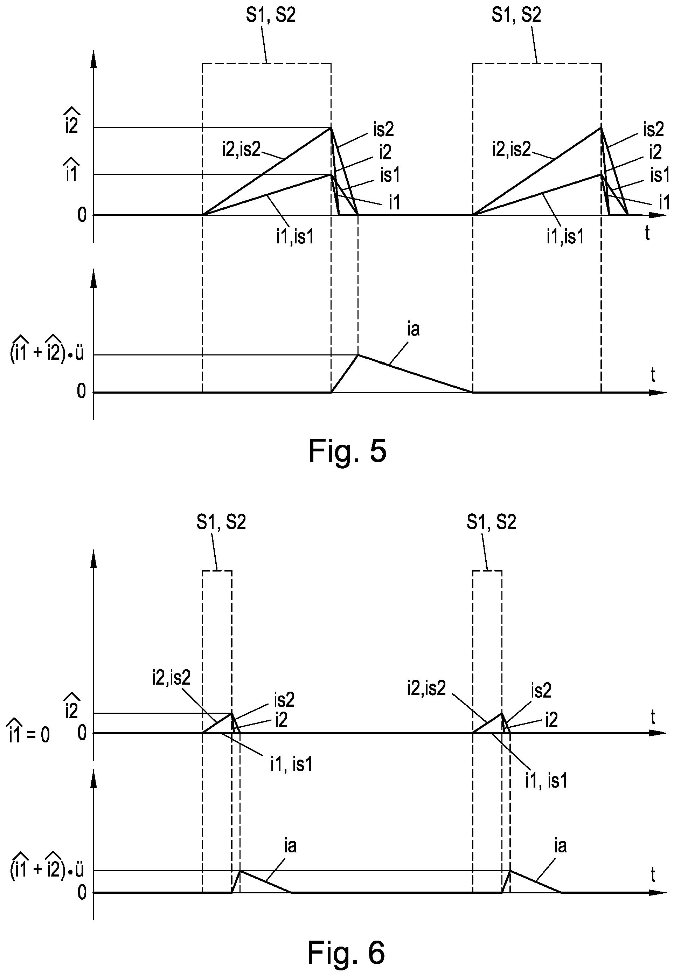

In den Fig. 5 und 6 sind die jeweils die Schaltmuster der Schalter S1, S2 dargestellt, wobei die Schalter S1, S2 während der strichlierten Markierung geschlossen sind und außerhalb davon geöffnet sind. Weiters sind in Fig. 5 und 6 der erste und zweite Schalterstrom i1, i2, welcher über den zugehörigen Schalter S1, S2 fließt, sowie der erste Strom is1, welcher durch die erste Primärwicklung L1 des Transformators T fließt und der zweite Strom is2, welcher durch die zweite Primärwicklung L2 des Transformators T fließt, dargestellt. Der erste Schalterstrom i1 ist mit dem ersten Strom is1, sowie der zweite Schalterstrom i1 mit dem zweiten Strom is1 deckungsgleich, solange der zugehörige Schalter S1, S2 geschlossen ist. Während die Schalter S1, S2 geschlossen sind, steigen der erste und zweite Schalterstrom i1, i2 an, womit Energie E1 vom ersten Zwischenkreiskondensator C1 über die erste Primärwicklung L1 in den Transformator T und Energie E2 vom zweiten Zwischenkreiskondensator C2 über die zweite Primärwicklung L2 in den Transformator T geladen wird. Die über den Schalterstrom i1, i2 transportierte Energie E1, E2 ist proportional zur Fläche unter dem jeweiligen Schalterstrom i1, i2.

Sobald jedoch der erste und zweite Schalter S1, S2 geöffnet werden, klingen der erste Schalterstrom i1 und der zweite Schalterstrom i2 rasch ab. Der erste und zweite Schalterstrom i1, i2 erreichen somit ihre Maximalwerte î1, î2 beim Übergang vom geschlossenen in den offenen Zustand des ersten und zweiten Schalters S1, S2.

Aufgrund von Streuinduktivitäten in der ersten und zweiten Primärwicklung L1, L2 verbleibende Energie wird bei geöffneten Schaltern S1, S2 jeweils über die erste und zweite Diode D1, D2 und den ersten und zweiten RC-Schaltung RC1, RC2 entladen. Somit klingen der erste und zweite Schalterstrom i1, i2 rascher ab, als der erste und zweite Strom is1, is2, da der erste und zweite Strom is1, is2 zusätzlich zum zugehörigen Schalterstrom i1, i2 die in die erste und zweite RC-Schaltung RC1, RC2 fließenden Ströme beinhaltet.

Nach dem Öffnen der Schalter S1, S2 steigt während einer Kommutierungsphase der Ausgangsstrom ia erst an und sinkt bei weiterhin geöffneten Schaltern S1, S2 nach dem Erreichen seines Spitzenwertes ab. Während der Ausgangsstrom ia absinkt, wird die Energie E1, E2 vom Transformator T an die Ausgangskapazität Ca abgegeben, wobei der erste und zweite Strom is1, is2 in den Ausgangsstrom ia transformiert wird. Der Spitzenwert des Ausgangsstroms ia ergibt sich aus der Summe der Maximalwerte des ersten und zweiten Schalterstroms î1, î2 jeweils multipliziert mit dem zugehörigen Übersetzungsverhältnis ü1, ü2 welchen in Fig. 5 und 6 identisch sind und daher als Übersetzungsverhältnis ü bezeichnet werden.

Es sei angenommen, dass die zweite Zwischenkreisspannung UC2 größer als die erste Zwischenkreisspannung UC1 ist. In Bezug auf Fig. 5 wird angenommen, dass das Ausgangspolpaar C, D des Sperrwandlers mit einer Last Z verbunden ist. Wie zu sehen ist, wird über den zweiten Schaltungsteil SNT2 des Sperrwandlers mehr Energie E2 aus dem zweiten Zwischenkreiskondensator C2 bezogen, als über das erste Schaltungsteil SNT1 aus dem ersten Zwischenkreiskondensator C1. Das bedeutet, dass der zweite Schalterstrom i2 größer ist, als der erste Schalterstrom i1, wobei die jeweilige übertragene Energie E1, E2 proportional zur Fläche unter dem zugehörigen Schalterstrom i1, i2 ist. Der Ausgangsstrom ia wird also zu einem Großteil aus dem zweiten Schalterstrom i2 transformiert.

In Bezug auf Fig. 6 sei ebenso angenommen, dass die zweite Zwischenkreisspannung UC2 größer als die erste Zwischenkreisspannung UC1 ist, wobei sich das Schaltnetzteil SNT jedoch im Leerlauf befindet, d.h. die Ausgangsanschlüsse C, D mit einer sehr kleinen oder einer vernachlässigbaren Last Z verbunden sind. Der Ausgangsstrom ia ist null, solange die Schalter S1, S2 geschlossen sind. Die Schalter S1, S2 sind kürzer geschlossen als in Fig. 5, da die Last Z geringer ist. Es wird nun lediglich Energie E2 aus dem zweiten Zwischenkreiskondensator C2 bezogen und im Transformator T gespeichert. Somit tritt nur ein zweiter Schalterstrom i2 (in dieser Phase deckungsgleich mit dem zweiten Strom is2) auf, wobei der erste Schalterstrom i1 und dementsprechend auch der erste Strom is1 null ist.

Daraufhin werden die Schalter S1, S2 geöffnet, womit der zweite Schalterstrom i2 rasch absinkt und der zweite Strom is2 etwas langsamer absinkt, da abermals Energie aus der Streuinduktivität des Transformators T in die die RC-Schaltung RC2 umgeladen wird. Währenddessen steigt der Ausgangsstrom ia während der Kommuntierungsphase auf sein Maximum an und sinkt daraufhin ab um, während der Ausgangskondensator Ca geladen wird. Es ist zu sehen, dass der Ausgangsstrom ia geringer als in Fig. 5 ist, da lediglich aus dem zweiten Zwischenkreiskondensator C2 Energie E2 bezogen wurde.

Der Ausgangskondensator Ca ist lediglich beschränkt in der Lage, die aus dem zweiten Zwischenkreiskondensator C2 stammende Energie E2 aus der Sekundärwicklung L2 des Transformators T aufzunehmen, da diese aufgenommene Energie E2 im Leerlauf nicht an eine ausreichend große Last Z entladen werden kann. Somit ist diese Schaltung nicht geeignet, die Zwischenkreisspannungen UC1, UC2 der Zwischenkreiskondensatoren C1, C2 im Leerlauf zu symmetrieren. Die Schaltungen der Fig. 1 und Fig. 2 sind jedoch zur Symmetrierung der Zwischenkreisspannungen UC1, UC2 geeignet, wenn die Ausgangsanschlüsse C, D mit einer ausreichend dimensionierten Last Z verbunden ist, da die Energie an die Last Z abgegeben wird.

Ein erfindungsgemäßes Schaltnetzteil SNT ist in Fig. 3 schematisch dargestellt. Es werden statt einem Transformator T mit zwei Primärwicklungen L1, L2 auf der Primärseite und einer gemeinsamen Sekundärwicklung L3 auf der Sekundärseite zwei zueinander induktiv ungekoppelte Transformatoren T1, T2 verwendet. Der erste Transformator T1 ist dem ersten Schaltungsteil SNT1 zugehörig und umfasst eine Primärwicklung L11 und eine Sekundärwicklung L12, welche mit der zugehörigen Primärwicklung L11 induktiv gekoppelt ist. Der zweite Transformator T2 ist dem zweiten Schaltungsteil SNT2 zugehörig und umfasst eine Primärwicklung L21 und eine Sekundärwicklung L22, welche mit der zugehörigen Primärwicklung L21 induktiv gekoppelt ist.

Im Gegensatz zu der Schaltung nach Fig. 1 sind in Fig. 3 weiters keine erste und zweite Symmetrierdiode DS1, DS2 vorgesehen und es wird auf eine Ausgangsdiode Da verzichtet. Vielmehr ist zwischen einem ersten Anschluss der ersten Sekundärwicklung L12 und dem zweiten Ausgangspol D, ein erster Symmetrierschalter SS1 vorgesehen, sowie zwischen einem ersten Anschluss der zweiten Sekundärwicklung L22 und dem zweiten Ausgangspol D ein zweiter Symmetrierschalter SS2 vorgesehen. Die Sekundärwicklung L12 des ersten Transformators T1 und die Sekundärwicklung L22 des zweiten Transformators T2 sind über die Symmetrierschalter SS1 und SS2 parallel mit dem Ausgangskondensator Ca verbunden, an welchem die Ausgangsgleichspannung Ua anliegt. Die Symmetrierschalter SS1 und SS2 werden vorzugsweise ebenfalls von der Steuereinheit 1 angesteuert.

Da auf eine Ausgangsdiode Da verzichtet wird und anstelle der primärseitigen Symmetrierdioden DS1, DS2 ausgangsseitige Symmetrierschalter SS1, SS2 vorgesehen sind, sind auch negative Schalterströme i1, i2 sowie ein negativer Ausgangsstrom ia möglich. Diese benötigten negativen Schalterströme i1, i2 resultieren daraus, da die Symmetrierschalter SS1, SS2 jeweils länger eingeschaltet bleiben als der jeweilige Schalterstrom i1, i2 zum Sinken auf null benötigt. Aus diesem Grund ist nicht nur eine Transformation von Energie E1 von der Primärwicklung L11 des ersten Transformators T1 auf die Sekundärwicklung L12 des ersten Transformators T1 möglich, sondern auch eine Transformation von Energie E1 von der Sekundärwicklung L12 des ersten Transformators T1 auf die Primärwicklung L11 des ersten Transformators T1. Analog ist nicht nur eine Transformation von Energie E2 von der Primärwicklung L21 des zweiten Transformators T2 auf die Sekundärwicklung L22 des zweiten Transformators T2 möglich, sondern auch eine Transformation von Energie E2 von der Sekundärwicklung L22 des zweiten Transformators T2 auf die Primärwicklung L21 des zweiten Transformators T2.

Es ist somit möglich in einer Situation, in welcher die erste Zwischenkreisspannung UC1, größer als die zweite Zwischenkreisspannung UC2 ist, überschüssige Energie E1 vom ersten Zwischenkondensator C1 über den ersten Transformator T1 in die Ausgangskapazität Ca zu laden und weiters Energie E2 von der Ausgangskapazität Ca über den zweiten Transformator T2 in den zweiten Zwischenkreiskondensator C2 zu laden.

In einer Situation, in welcher die zweite Zwischenkreisspannung UC2 größer als die erste Zwischenkreisspannung UC1 ist, ist es ebenso möglich überschüssige Energie E2 vom zweiten Zwischenkondensator C2 über den zweiten Transformator T2 in die Ausgangskapazität Ca zu laden und weiters Energie E1 über den ersten Transformator T1 in den ersten Zwischenkreiskondensator C1 zu laden.

Fig 1 bis 8 beschreiben eine Symmetrierung von zwei Zwischenkreisspannungen UC1, UC2 an zwei Zwischenkreiskondensatoren C1, C2. Es können natürlich auch mehr als zwei Zwischenkreisspannungen UC1, UC2 symmetriert werden, wobei pro weiterer Zwischenkreisspannung ein weiterer Schaltungsteil vorgesehen ist. Pro weiterem Schaltungsteil ist ein weiterer Transformator vorgesehen, dessen Primärseite mit der zugehörigen weiteren Zwischenkreisspannung verbunden ist und dessen Sekundärseite parallel zu den Sekundärseiten des ersten und zweiten Transformators T1, T2 geschaltet ist. Die Funktionsweise der weiteren Schaltungsteile kann der Funktionsweise des hier beschriebenen ersten und zweiten Schaltungsteils SNT1, SNT2 entsprechen.

Das erfindungsgemäße Verfahren wird nur beispielhaft anhand der Symmetrierung zweier Zwischenkreisspannungen beschrieben und kann auch auf eine beliebige Anzahl an Zwischenkreisspannungen angewendet werden.

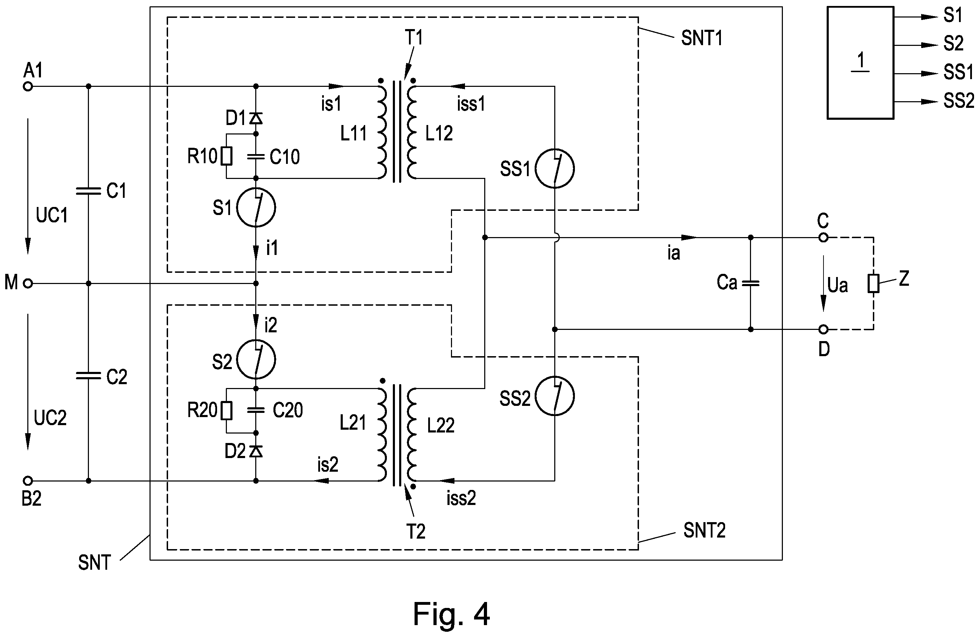

In Fig. 4 ist das schematische Schaltnetzteil SNT aus Fig. 2 als Sperrwandler ausgeführt dargestellt. Die Primärwicklung L11 des ersten Transformators T1 ist parallel zur Serienschaltung der ersten Diode D1 geschaltet, die Primärwicklung L12 des zweiten Transformators T2 ist parallel zur zweiten Diode D2 geschaltet.

Der erste Schaltungsteil SNT1 des Sperrwandlers verbindet wie in Fig. 2 den Mittelpunkt M mit dem ersten oberen Eingangspol A1 und umfasst (vom Mittelpunkt M in Richtung des ersten oberen Eingangspols A1) eine Serienschaltung eines ersten Schalters S1, einer ersten RC-Schaltung RC1 (Parallelschaltung eines ersten Widerstands R10 und eines ersten Kondensators C10), sowie einer ersten Diode D1. Die Durchlassrichtung der ersten Diode D1 ist gegen die erste Zwischenkreisspannung UC1 geschaltet, was bedeutet, dass die Kathode der ersten Diode D1 mit dem ersten oberen Eingangspol A1 verbunden ist und die Anode der ersten Diode D1 über die erste RC-Schaltung RC1 und ersten Schalter S1 mit dem Mittelpunkt M verbunden ist. Der zweite Schaltungsteil SNT2 des Sperrwandlers verbindet den zweiten unteren Eingangspol B2 mit dem Mittelpunkt M.

Vorzugsweise umfasst der zweite Schaltungsteil SNT2 (vom zweiten unteren Eingangspol B2 in Richtung des Mittelpunkts M) eine Serienschaltung einer zweiten Diode D2 einer zweiten RC-Schaltung RC2 (Parallelschaltung eines zweiten Widerstands R20 und eines zweiten Kondensators C20) und eines zweiten Schalters S2. Die Durchlassrichtung der zweiten Diode D2 ist gegen die erste Zwischenkreisspannung UC1 geschaltet, was bedeutet, dass die Anode der zweiten Diode D2 mit zweiten unteren Eingangspol B2 verbunden ist und die Kathode der zweiten Diode D2 über die zweite RC-Schaltung RC2 und den zweiten Schalter S2 mit dem Mittelpunkt M verbunden ist.

Die erste/zweite RC-Schaltung RC1/RC2 dient der Vernichtung von in der Streuinduktivität des ersten/zweiten Transformators T1/T2 gespeicherten Restenergie. Anstatt der ersten/zweiten RC-Schaltung RC2 kann jeweils auch eine andere Energievernichtungsschaltung, wie eine Serienschaltung einer Diode und Transildiode etc. vorgesehen sein.

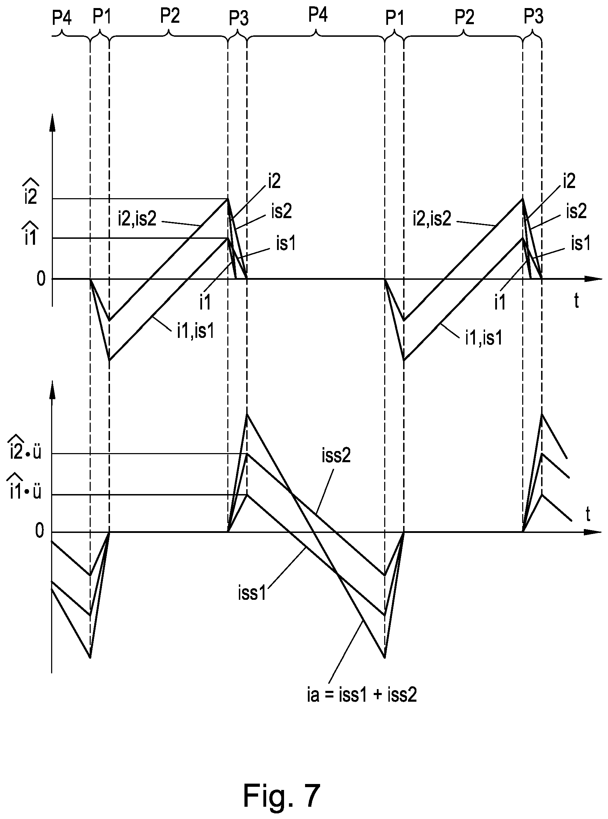

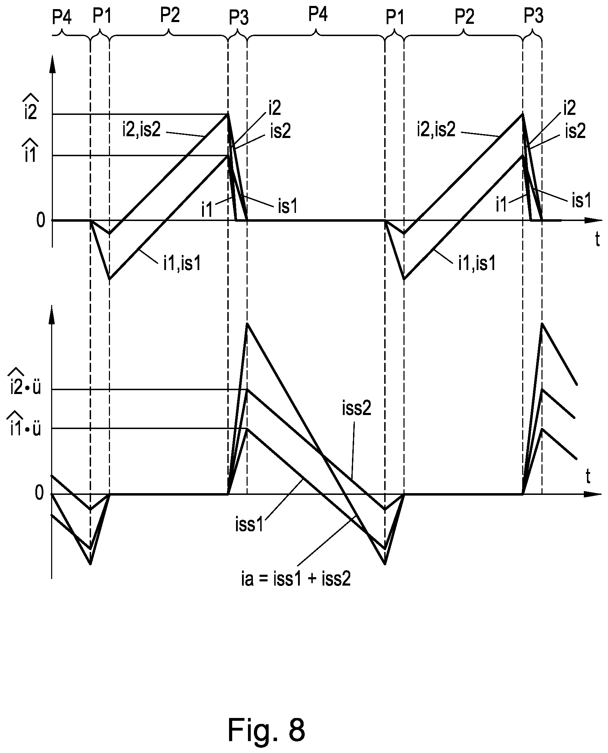

Der Ausgangsstrom ia ergibt sich aus der Summe des ersten Symmetrierstroms iss1 und des zweiten Symmetrierstroms iss2. Der erste Symmetrierstroms iss1 entspricht dem ersten Strom is1 multipliziert mit dem Übersetzungsverhältnis ü1 des ersten Transformators T1, der zweite Symmetrierstroms iss2 dem zweiten Strom is2 multipliziert mit dem Übersetzungsverhältnis ü2 des zweiten Transformators T2, welches vorzugsweise dem Übersetzungsverhältnis ü1 des ersten Transformators T1 entspricht und daher in den Figuren 7 und 8 allgemein als Übersetzungsverhältnis ü bezeichnet wird.

Während der erste und zweite Schalter S1, S2 geschlossen sind, sind die Symmetrierschalter SS1, SS2 geöffnet. Es ist zu vermeiden, dass die Schalter S1, S2 und Symmetrierschalter SS1, SS2 gleichzeitig geschlossen sind. Es können aber Phasen eintreten, in denen Schalter S1, S2 und Symmetrierschalter SS1, SS2 gleichzeitig geöffnet sind.

Die Schalter S1, S2 und Symmetrierschalter SS1, SS2 wechseln zwischen den Schaltphasen P1, P2, P3, P4 ab, wobei in der ersten Schaltphase P1 sowohl die Schalter S1, S2 als auch die Symmetrierschalter SS1, SS2 geöffnet sind. In der zweiten Schaltphase P2 sind die Schalter S1, S2 geschlossen und die Symmetrierschalter SS1, SS2 geöffnet. In der dritten Schaltphase P3 sind wieder sowohl die Schalter S1, S2 geöffnet als auch die Symmetrierschalter SS1, SS2 geöffnet. In der vierten Schaltphase P4 sind die Schalter S1, S2 geöffnet und die Symmetrierschalter SS1, SS2 geschlossen. Die vierte Schaltphase P4 ist somit komplementär zur zweiten Schaltphase P2.

In der zweiten Schaltphase P2 erfolgt erst eine Energieumladung vom ersten Transformator T1 in den ersten Zwischenkreiskondensator C1 sowie vom zweiten Transformator T2 in den zweiten Zwischenkreiskondensator C2. Dies ist in Fig. 7 und 8 anhand der negativen (steigenden) ersten und zweiten Ströme is1, is2 ersichtlich. Nach dem Nulldurchgang der Ströme i1, i2 erfolgt jeweils eine Umladung von Energie E1 vom ersten Zwischenkreiskondensator C1 in den ersten Transformator T1, sowie eine Umladung von Energie E2 vom zweiten Zwischenkreiskondensator C2 in den zweiten Transformator T2. Dies ist in Fig. 7 und 8 anhand der positiven (steigenden) ersten und zweiten Ströme is1, is2 ersichtlich. Im gesamten (positiven und negativen) steigenden Abschnitt der zweiten Schaltphase P2 entspricht der erste Strom is1 dem ersten Schalterstrom i1 und der zweite Strom is2 dem zweiten Schalterstrom i2.

Der Maximalwert des zweiten Stroms î2, als größer als der Maximalwert des ersten Stroms î1, da die im zweiten Zwischenkreiskondensator C2 gespeicherte Energie E2 größer ist, als die im ersten Zwischenkreiskondensator C1 gespeicherte Energie E1.

Während der dritten Schaltphase P3 sinken der erste und zweite Schalterstrom i1, i2 rasch auf null, da der erste und zweite Schalter geöffnet sind und die Primärwicklungen L11, L21 der Transformatoren T1, T2 nicht mehr mit Energie E1, E2 vom zugehörigen Zwischenkreiskondensator C1, C2 versorgt werden. Währenddessen entladen sich Restenergien der Streuinduktivitäten der Primärwicklungen L11, L21 der Transformatoren T1, T2 jeweils über die Ströme is1, is2 in die zugehörige RC-Schaltung RC1, RC2, weshalb die Ströme is1, is2 nicht so rasch abfallen, wie die Schalterströme is1, is2. Mit Beginn der vierten Schaltphase P4, fließen keine ersten und zweiten Ströme i1, i2 und keine ersten und zweiten Schalterströme is1, is2 mehr.

In der dritten Schaltphase P3 (Kommutierungsphase) erfolgt die Kommutierung der Primärströme is1, is2 auf die Sekundärseite der Transformatoren T1, T2, wodurch die Symmetrierströme iss1, iss2 steigen.

Der Ausgangsstrom ia erreicht am Ende der dritten Schaltphase P3 gemeinsam mit den Symmetrierströmen iss1, iss2 sein Maximum, da der Ausgangsstrom ia die Summe der Symmetrierströme iss1, iss2 darstellt. In der dritten Schaltphase P3 verlaufen die Symmetrierströme iss1, iss2 gegengleich zu den Schalterströmen is1, is2, sodass der Ausgangssstrom ia am Ende der dritten Schaltphase P3 null ist.

Daraufhin wird in der vierten Schaltphase P4, d.h. nach der dritten Schaltphase, welche als Kommutierphase dient, am ersten Transformator T1 gespeicherte Energie E1 über den ersten Symmetrierstrom iss1 in den Ausgangskondensator Ca geladen und am zweiten Transformator T2 gespeicherte Energie E2 über den zweiten Symmetrierstrom iss2 in den Ausgangskondensator Ca geladen. Da die im ersten Transformator T1 gespeicherte Energie E1 geringer ist, als die im zweiten Transformator T2 gespeicherte Energie E2, sinkt der erste Symmetrierstrom iss1 rascher unter die Nulllinie als der zweite Symmetrierstrom iss2. Nachdem der erste Symmetrierstrom iss1 die Nulllinie erreicht hat, wird dieser jedoch negativ, womit wieder Energie vom Ausgangskondensator Ca in den ersten Transformator T1 geladen wird. Nachdem der zweite Symmetrierstrom iss2 die Nulllinie erreicht hat, wird dieser ebenso negativ, womit auch eine geringe Menge von Energie vom Ausgangskondensator Ca in den zweiten Transformator T2 geladen wird.

Die darauffolgende erste Schaltphase P1 stellt wie die dritte Schaltphase P3 eine Kommutierungsphase dar. Es liegt das gleiche Verhalten wie bei P3 vor, wobei die Vorzeichen der Ströme i1, i2, is1, is2 iss1, iss2, vertauscht sind. Die Kommutierungsphasen (erste und dritte Schaltphase P1, P3) sind in den Figuren sehr detailliert und schematisch dargestellt.

Es ist abermals der Fall, dass die zweite Zwischenkreisspannung UC2 größer als die erste Zwischenkreisspannung UC1 ist, dargestellt, wobei wiederum eine Symmetrierung der Zwischenkreisspannungen UC2 UC1 das Ziel darstellt.

Die im zweiten Zwischenkreiskondensator C2 gespeicherte Energie E2 ist größer, als die im ersten Zwischenkreiskondensator C1 gespeicherte Energie E1, da die zweite Zwischenkreisspannung UC2 größer ist, als die erste Zwischenkreisspannung UC1. Daraus ergibt sich, dass in der zweiten Schaltphase P2 der negative erste Schalterstrom is1 betragsmäßig größer ist als der zweite Schalterstrom is2. Der positive erste Schalterstrom is1 ist in der zweiten Schaltphase P2 jedoch geringer als der positive zweite Schalterstrom is2, da aus dem zweiten Zwischenkreiskondensator UC2 mehr Energie E2 in die Primärwicklung T21 des zweiten Transformators T2 geladen wird, als Energie E1 aus dem ersten Zwischenkreiskondensator UC1 in die Primärwicklung T11 des ersten Transformators T1 geladen wird. Daraus ergibt sich in der vierten Schaltphase P4 konsequenterweise natürlich auch ein höherer positiver zweiter Symmetrierstrom iss2 gegenüber dem ersten Symmetrierstrom iss1, da mehr Energie E2 im zweiten Transformator T2 als im ersten Transformator T1 vorhanden ist. Ebenso ergibt sich in der vierten Schaltphase P4 wiederum ein betragsmäßig größerer erster negativer Symmetrierstrom iss1 gegenüber dem zweiten Symmetrierstrom iss2, da mehr Energie vom Ausgangskondensator Ca in den ersten Transformator T1 (d.h. in seine Sekundärwicklung T12) geladen wird, als in den zweiten Transformator T2.

In Summe wird mehr Energie vom zweiten Zwischenkreiskondensator C2 als vom ersten Zwischenkreiskondensator C1in den Ausgangskondensator Ca geladen. Im Gegenzug wird mehr Energie vom Ausgangskondensator Ca in den ersten Zwischenkreiskondensator C1 als in den zweiten Zwischenkreiskondensator C2 geladen, um die Zwischenkreisspannungen UC1, UC2 zu symmetrieren.

Fig. 7 stellt den Fall des Leerlaufs dar, d.h. dass keine oder eine vernachlässige Last Z mit dem Ausgangskondensator Ca verbunden ist, wogegen in Fig. 8 eine signifikante Last Z vorgesehen ist, z.B. in Form einer Beleuchtung, eines Displays, eines Lüfters etc.

Mangels einer signifikanten Last Z erfolgt in Fig. 7 die Symmetrierung der Zwischenkreisspannungen UC1, UC2 durch Umladung zwischen den Zwischenkreiskondensatoren C1, C2, was jedoch über den Ausgangskondensator Ca erfolgt. In Fig. 8 hingegen, wird zudem Energie E1, E2 vom Ausgangskondensator Ca an die Last Z abgegeben.

## Patentansprüche

1. Schaltnetzteil (SNT) zur Symmetrierung einer Mehrzahl von an jeweils zwischen einem Eingangspolpaar (A1, B1, A2, B2) des Schaltnetzteils (SNT) an einem Zwischenkreiskondensator (C1, C2) eines Zwischenkreises anlegbaren Zwischenkreisspannungen (UC1, UC2), wobei das Schaltnetzteil (SNT) ausgestaltet ist, eine Ausgangsgleichspannung (Ua) an einem zwischen einem ersten Ausgangspol (C) und einem zweiten Ausgangspol (D) des Schaltnetzteils (SNT) verbundenen Ausgangskondensator (Ca) des Schaltnetzteils (SNT) auszugeben, **dadurch gekennzeichnet, dass** das Schaltnetzteil (SNT) pro jeweils eine Zwischenkreisspannung (UC1, UC2) aufweisendem Eingangspolpaar (A1, B1, A2, B2) einen Schaltungsteil (SNT1, SNT2) mit jeweils einem Transformator (T1, T2) umfasst, wobei die Transformatoren (T1, T2) zwischen den unterschiedlichen Schaltungsteilen (SNT1, SNT2) nicht miteinander induktiv gekoppelt sind, und wobei die Eingangspolpaare (A1, B1, A2, B2) der Schaltungsteile (SNT1, SNT2) jeweils mit dem die Zwischenkreisspannung (UC1, UC2) zur Verfügung stellenden und die Zwischenkreisspannung (UC1, UC2) aufweisenden Zwischenkreiskondensator (C1, C2) verbindbar sind und die Schaltungsteile (SNT1, SNT2) ausgestaltet sind, Energie (E1, E2) über die Eingangspolpaare (A1, B1, A2, B2) in eine Primärwicklung (L11, L21) des zugehörigen Transformators (T1, T2) und umgekehrt zu laden, **dass** Sekundärwicklungen (L12, L22) der Transformatoren (T1, T2) jeweils mit dem Ausgangskondensator (Ca) verbunden sind, **dass** jeweils ein erster Anschluss der Sekundärwicklungen (L12, L22) der Transformatoren (T1, T2) über einen Symmetrierschalter (SS1, SS2) mit dem zweiten Ausgangspol (D) verbunden ist, **dass** jeweils ein zweiter Anschluss der Sekundärwicklungen (L12, L22) der Transformatoren (T1, T2) mit dem ersten Ausgangspol (C) verbunden ist, **dass** in den Schaltungsteilen (SNT1, SNT2) jeweils die Primärwicklung (L11, L21) des zugehörigen Transformators (T1, T2) parallel auf eine zugehörige Diode (D1, D2) geschaltet ist, wobei die Dioden (D1, D2) jeweils in Serie mit einem zugehörigen Schalter (S1, S2) zwischen das zugehörige Eingangspolpaar (A1, B1) geschaltet sind, **dass** in jedem Schaltungsteil (SNT1, SNT2) eine jeweilige Energievernichtungsschaltung in Serie zu den Dioden (D1, D2) geschaltet ist, um Restenergie, die in einer Streuinduktivität des zugehörigen Transformators (T1) gespeichert ist, zu vernichten **und dass** eine Steuereinheit (1) vorgesehen ist, die ausgestaltet ist, die Symmetrierschalter (SS1, SS2) und die Schalter (S1, S2) in aufeinanderfolgenden Schaltphasen (P1, P2, P3, P4) anzusteuern und dabei in einer ersten Schaltphase (P1) sowohl die Schalter (S1, S2) als auch die Symmetrierschalter (SS1, SS2) zu öffnen, in einer der ersten Schaltphase (P1) nachfolgenden zweiten Schaltphase (P2) die Schalter (S1, S2) zu schließen und die Symmetrierschalter (SS1, SS2) zu öffnen, in einer der zweiten Schaltphase (P2) nachfolgenden dritten Schaltphase (P3) sowohl die Schalter (S1, S2) als auch die Symmetrierschalter (SS1, SS2) zu öffnen und in einer der dritten Schaltphase (P3) nachfolgenden vierten Schaltphase (P4) die Schalter (S1, S2) zu öffnen und die Symmetrierschalter (SS1, SS2) zu schließen, um Energie (E1, E2) von einem Eingangspolpaar (A1, B1, A2, B2) mit einer Zwischenkreisspannung (UC1) über den zugehörigen Transformator (T1, T2) auf die Ausgangskapazität (Ca) und von der Ausgangskapazität (Ca) auf zumindest ein Eingangspolpaar (A1, B1, A2, B2) mit einer geringeren Zwischenkreisspannung umzuladen.

2. Schaltnetzteil (SNT) nach Anspruch 1, **dadurch gekennzeichnet, dass** das Schaltnetzteil (SNT) einen ersten Schaltungsteil (SNT1) der Mehrzahl von Schaltungsteilen (SNT1, SNT2) mit einem ersten Transformator (T1) der Mehrzahl von in einem Schaltungsteil (SNT1, SNT2) vorgesehenen Transformatoren (T1, T2) und einem ersten Eingangspolpaar (A1, B1) der Mehrzahl von Eingangspolpaaren (A1, B1, A2, B2) sowie einen zweiten Schaltungsteil (SNT2) der Mehrzahl von Schaltungsteilen (SNT1, SNT2) mit einem zweiten Transformator (T2) der Mehrzahl von in einem Schaltungsteil (SNT1, SNT2) vorgesehenen Transformatoren (T1, T2) und einem zweiten Eingangspolpaar (A2, B2) der Mehrzahl von Eingangspolpaaren (A1, B1, A2, B2) umfasst, wobei der erste Schaltungsteil (SNT1) eingangsseitig über das erste Eingangspolpaar (A1, B1) mit einem ersten Zwischenkreiskondensator (C1), aufweisend eine erste Zwischenkreisspannung (UC1), verbindbar ist und der zweite Schaltungsteil (SNT2) eingangsseitig über das zweite Eingangspolpaar (A2, B2) mit einem zweiten Zwischenkreiskondensator (C2), aufweisend eine zweite Zwischenkreisspannung (UC2), verbindbar ist, wobei der erste Schaltungsteil (SNT1) ausgestaltet ist, Energie (E1) vom ersten Eingangspolpaar (A1, B1) in eine Primärwicklung (L11) des ersten Transformators (T1) und umgekehrt zu laden und wobei der zweite Schaltungsteil (SNT2) ausgestaltet ist, Energie (E2) vom zweiten Eingangspolpaar (A2, B2) in eine Primärwicklung (L21) des zweiten Transformators (T2) und umgekehrt zu laden, **und dass** eine Sekundärwicklung (L12) des ersten Transformators (T1) sowie eine Sekundärwicklung (L22) des zweiten Transformators (T2) mit dem Ausgangskondensator (Ca), verbunden sind, um bei einer ersten Zwischenkreisspannung (UC1) größer der zweiten Zwischenkreisspannung (UC2) Energie (E1) aus dem ersten Eingangspolpaar (A1, B1) über den ersten Transformator (T1) auf die Ausgangskapazität (Ca) und von der Ausgangskapazität (Ca) in das zweite Eingangspolpaar (A2, B2) umzuladen sowie bei einer zweiten Zwischenkreisspannung (UC2) größer der ersten Zwischenkreisspannung (UC1) Energie (E2) aus dem zweiten Eingangspolpaar (A2, B2) über den zweiten Transformator (T2) auf die Ausgangskapazität (Ca) und von der Ausgangskapazität (Ca) in das erste Eingangspolpaar (A1, B1) umzuladen.

3. Schaltnetzteil (SNT) nach Anspruch 2, **dadurch gekennzeichnet, dass** ein erster Anschluss der Sekundärwicklung (L12) des ersten Transformators (T1) über einen ersten Symmetrierschalter (SS1), der Symmetrierschalter (SS1, SS2) zum Verbinden eines jeweils ersten Anschlusses der Sekundärwicklungen (L12, L22) der Transformatoren (T1, T2) mit dem zweiten Ausgangspol (D), mit dem zweiten Ausgangspol (D) verbunden und ein erster Anschluss der Sekundärwicklung (L22) des zweiten Transformators (T2) über einen zweiten Symmetrierschalter (SS2), der Symmetrierschalter (SS1, SS2) zum Verbinden eines jeweils ersten Anschlusses der Sekundärwicklungen (L12, L22) der Transformatoren (T1, T2) mit dem zweiten Ausgangspol (D), mit dem zweiten Ausgangspol (D) verbunden ist, **dass** ein zweiter Anschluss der Sekundärwicklung (L12) des ersten Transformators (T1) und ein zweiter Anschluss der Sekundärwicklung (L22) des zweiten Transformators (T2) mit dem ersten Ausgangspol (C) verbunden ist, **und dass** eine Steuereinheit (1) vorgesehen ist, die ausgestaltet ist, den ersten und zweiten Symmetrierschalter (SS1, SS2) anzusteuern, um bei einer ersten Zwischenkreisspannung (UC1) größer der zweiten Zwischenkreisspannung (UC2) Energie (E1) aus dem ersten Eingangspolpaar (A1, B1) über den ersten Transformator (T1) auf die Ausgangskapazität (Ca) und von der Ausgangskapazität (Ca) in das zweite Eingangspolpaar (A2, B2) umzuladen, sowie bei einer zweiten Zwischenkreisspannung (UC2) größer der ersten Zwischenkreisspannung (UC1) Energie (E2) aus dem zweiten Eingangspolpaar (A2, B2) über den zweiten Transformator (T2) auf die Ausgangskapazität (Ca) und von der Ausgangskapazität (Ca) in das erste Eingangspolpaar (A1, B1)umzuladen.

4. Schaltnetzteil (SNT) nach einem der Ansprüche 1 bis 3, **dadurch gekennzeichnet, dass** die Eingangspolpaare (A1, B1, A2, B2) in Serie geschaltet sind.

5. Schaltnetzteil (SNT) nach einem der Ansprüche 1 bis 4, **dadurch gekennzeichnet, dass** das Schaltnetzteil (SNT) als Sperrwandler ausgeführt ist.

6. Anordnung aus einer leistungselektronischen Vorrichtung mit einer Mehrzahl an Zwischenkreiskondensatoren (C1, C2), jeweils verbunden mit den Eingangspolpaaren (A1, B1, A2, B2) eines Schaltnetzteils (SNT) nach einem der Ansprüche 1 bis 5, zur Symmetrierung von an der Mehrzahl an Zwischenkreiskondensatoren (C1, C2) anliegenden Zwischenkreisspannungen (UC1, UC2).

7. Verfahren zur Symmetrierung einer Mehrzahl an Zwischenkreisspannungen (UC1, UC2), welche jeweils an einem zwischen einem zugehörigen Eingangspolpaar (A1, B1, A2, B2) eines Schaltnetzteils (SNT) angeordneten Zwischenkreiskondensator (C1, C2) eines Zwischenkreises anliegen, wobei eine Ausgangsspannung (Ua) an einem Ausgangskondensator (Ca) des Schaltnetzteils (SNT) zwischen einem ersten Ausgangspol (C) und einem zweiten Ausgangspol (D) des Schaltnetzteils (SNT) ausgegeben wird, **dadurch gekennzeichnet, dass** Energie (E1, E2) aus dem Zwischenkreiskondensator (C1, C2) mit einer Zwischenkreisspannung (UC1, UC2) über eine Primärwicklung (L11, L12) eines zugehörigen Transformators (T1, T2) eines jeweiligen Schaltungsteils (SNT1, SNT2), wobei die Transformatoren (T1, T2) zwischen den unterschiedlichen Schaltungsteilen (SNT1, SNT2) nicht miteinander induktiv gekoppelt sind, auf eine Sekundärwicklung (L12, L22) des zugehörigen Transformators (T1, T2) transformiert und auf eine Ausgangskapazität (Ca) umgeladen wird, sowie Energie (E1, E2) von der Ausgangskapazität (Ca) in den oder die anderen Zwischenkreiskondensatoren (C1, C2) mit einer geringeren Zwischenkreisspannung umgeladen wird, indem die Energie (E1, E2) in Sekundärwicklungen (L2) von dem oder den anderen Zwischenkreiskondensatoren (C1, C2) mit einer geringeren Zwischenkreisspannung zugehörigen Transformatoren (T2) des Schaltnetzteils (SNT) umgeladen, jeweils auf eine Primärwicklung (L21) der anderen Transformatoren (T2) transformiert und in den zugehörigen Zwischenkreiskondensator (UC1, UC2) umgeladen wird, **dass** in den Schaltungsteilen (SNT1, SNT2) jeweils die Primärwicklung (L11, L21) des zugehörigen Transformators (T1, T2) parallel auf eine zugehörige Diode (D1, D2) geschaltet wird, wobei die Dioden (D1, D2) jeweils in Serie mit einem zugehörigen Schalter (S1) zwischen das zugehörige Eingangspolpaar (A1, B1) geschaltet werden, **dass** die Schalter (S1) und jeweils zwischen einem ersten Anschluss der Sekundärwicklung (L12, L22) der Transformatoren (T1, T2) und dem ersten Ausgangspol (C) angeordnete Symmetrierschalter (SS1, SS2) in aufeinanderfolgenden Schaltphasen (P1, P2, P3, P4) angesteuert werden, indem in einer ersten Schaltphase (P1) sowohl die Schalter (S1, S2) als auch die Symmetrierschalter (SS1, SS2) geöffnet werden, in einer der ersten Schaltphase (P1) nachfolgenden zweiten Schaltphase (P2) die Schalter (S1, S2) geschlossen werden und die Symmetrierschalter (SS1, SS2) geöffnet werden, in einer der zweiten Schaltphase (P2) nachfolgenden dritten Schaltphase (P3) sowohl die Schalter (S1, S2) als auch die Symmetrierschalter (SS1, SS2) geöffnet werden und in einer der dritten Schaltphase (P3) nachfolgenden vierten Schaltphase (P4) die Schalter (S1, S2) geöffnet werden und die Symmetrierschalter (SS1, SS2) geschlossen werden, um Energie (E1, E2) von einem Eingangspolpaar (A1, B1, A2, B2)mit einer Zwischenkreisspannung (UC1), über den zugehörigen Transformator (T1, T2) auf die Ausgangskapazität (Ca) und von der Ausgangskapazität (Ca) auf zumindest ein Eingangspolpaar (A1, B1, A2, B2) mit einer geringeren Zwischenkreisspannung umzuladen, **und dass** in einer in Serie zu den Dioden (D1, D2) geschalteten Energievernichtungsschaltung des jeweiligen Schaltungsteils (SNT1, SNT2) in einer Streuinduktivität des zugehörigen Transformators (T1, T2) gespeicherte Restenergie vernichtet wird.

8. Verfahren nach Anspruch 7, **dadurch gekennzeichnet, dass** eine erste Zwischenkreisspannung (UC1) an einem zwischen einem ersten Eingangspolpaar (A1, B1) der Eingangspolpaare (A1, B1, A2, B2) des Schaltnetzteils (SNT) angeordneten ersten Zwischenkreiskondensator (C1) und eine zweite Zwischenkreisspannung (UC2) an einem zwischen einem zweiten Eingangspolpaar (A2, B2) der Eingangspolpaare (A1, B1, A2, B2) des Schaltnetzteils (SNT) angeordneten zweiten Zwischenkreiskondensator (C2) symmetriert wird, indem
bei einer ersten Zwischenkreisspannung (UC1) größer der zweiten Zwischenkreisspannung (UC2) Energie (E1) aus dem ersten Zwischenkreiskondensator (C1) über eine erste Primärwicklung (L11) eines ersten Transformators (T1) auf eine Sekundärwicklung (L12) des ersten Transformators (T1) transformiert und von der Sekundärwicklung (L12) des ersten Transformators (T1) auf eine Ausgangskapazität (Ca) umgeladen wird, sowie Energie (E2) von der Ausgangskapazität (Ca) in eine Sekundärwicklung (L2) eines zweiten Transformators (T2) des Schaltnetzteils (SNT) umgeladen wird und von der Sekundärwicklung (L2) des zweiten Transformators (T2) auf eine Primärwicklung (L21) des zweiten Transformators (T2) transformiert und von der Primärwicklung (L21) des zweiten Transformators (T2) in den zweiten Zwischenkreiskondensator (U2) umgeladen wird, oder
bei einer zweiten Zwischenkreisspannung (UC2) größer der ersten Zwischenkreisspannung (UC1) Energie (E2) aus dem zweiten Zwischenkreiskondensator (C2) über die Primärwicklung (L21) des zweiten Transformators (T2) auf die Sekundärwicklung (L22) des zweiten Transformators (T2) transformiert und von der Sekundärwicklung (L22) des zweiten Transformators (T2) auf die Ausgangskapazität (Ca) umgeladen wird, sowie Energie (E1) und von der der Ausgangskapazität (Ca) in die Sekundärwicklung (L12) des ersten Transformators (T1) umgeladen wird und von der Sekundärwicklung (L21) des ersten Transformators (T1) auf die Primärwicklung (L11) des ersten Transformators (T1) transformiert und von der Primärwicklung (L11) des ersten Transformators (T1) in den ersten Zwischenkreiskondensator (UC1) umgeladen wird.

9. Verfahren nach Anspruch 8, **dadurch gekennzeichnet, dass** ein zwischen einem ersten Anschluss der Sekundärwicklung (L12) des ersten Transformators (T1) und dem zweiten Ausgangspol (D) angeordneter erster Symmetrierschalter (SS1) der jeweils zwischen einem ersten Anschluss der Sekundärwicklung (L12, L22) der Transformatoren (T1, T2) und dem zweiten Ausgangspol (D) angeordneten Symmetrierschalter (SS1, SS2) angesteuert wird, sowie ein zwischen einem ersten Anschluss der Sekundärwicklung (L22) des zweiten Transformators (T2) und dem zweiten Ausgangspol (D) angeordneter zweiter Symmetrierschalter (SS2) der jeweils zwischen einem ersten Anschluss der Sekundärwicklung (L12, L22) der Transformatoren (T1, T2) und dem zweiten Ausgangspol (D) angeordneten Symmetrierschalter (SS1, SS2) angesteuert wird, um bei einer ersten Zwischenkreisspannung (UC1) größer der zweiten Zwischenkreisspannung (UC2) Energie (E1) aus dem ersten Zwischenkreiskondensator (C1) über den ersten Transformator (T1) auf die Ausgangskapazität (Ca) umzuladen und Energie (E2) von der Ausgangskapazität (Ca) in die zweite Zwischenkreisspannung (U2) umzuladen, und um bei einer zweiten Zwischenkreisspannung (UC2) größer der ersten Zwischenkreisspannung (UC1) Energie (E2) aus dem zweiten Zwischenkreiskondensator (C2) über den zweiten Transformator (T2) auf die Ausgangskapazität (Ca) umzuladen und Energie (E1) der Ausgangskapazität (Ca) in die erste Zwischenkreisspannung (UC1) umzuladen.

## Claims

1. Switched-mode power supply (SNT) for balancing a plurality of intermediate circuit voltages (UC1, UC2) which can each be present at a respective intermediate circuit capacitor (C1, C2) of a respective intermediate circuit between a respective input terminal pair (A1, B1, A2, B2) of the switched-mode power supply (SNT), wherein the switched-mode power supply (SNT) is designed to output a DC output voltage (Ua) at an output capacitor (Ca) of the switched-mode power supply (SNT) connected between a first output terminal (C) and a second output terminal (D) of the switched-mode power supply (SNT), **characterized in that** for each input terminal pair (A1, B1, A2, B2) exhibiting an intermediate circuit voltage (UC1, UC2), the switched-mode power supply (SNT) comprises a circuit part (SNT1, SNT2) each having a transformer (T1, T2), which transformers (T1, T2) between the different circuit parts (SNT1, SNT2) are not inductively coupled to one another, and wherein the input terminal pairs (A1, B1, A2, B2) of the circuit parts (SNT1, SNT2) are each connectable to the intermediate circuit capacitor (C1, C2) which provides the intermediate circuit voltage (UC1, UC2) and exhibits the intermediate circuit voltage (UC1, UC2), and the circuit parts (SNT1, SNT2) are designed to transfer energy (E1, E2) via the input terminal pairs (A1, B1, A2, B2) to a primary winding (L11, L21) of the associated transformer (T1, T2) and vice versa, **in that** secondary windings (L12, L22) of the transformers (T1, T2) are each connected to the output capacitor (Ca), **in that,** in each case, a first terminal connection of the secondary windings (L12, L22) of the transformers (T1, T2) is connected to the second output terminal (D) via a balancing switch (SS1, SS2), **in that,** in each case, a second terminal connection of the secondary windings (L12, L22) of the transformers (T1, T2) is connected to the first output terminal (C), **in that,** in each case, in the circuit parts (SNT1, SNT2) the primary winding (L11, L21) of the associated transformer (T1, T2) is connected in parallel to an associated diode (D1, D2), wherein the diodes (D1, D2) are each connected in series to an associated switch (S1, S2) between the associated input terminal pair (A1, B1), **in that,** in each circuit part (SNT 1, SNT2), a corresponding energy annihilation circuit is connected in series to the diodes (D1, D2) in order to annihilate residual energy stored in a stray inductance of the associated transformer (T1) **and in that** a control unit (1) is provided which is designed to control the balancing switches (SS1, SS2) and the switches (S1, S2) in successive switching phases (P1, P2, P3, P4) and to open both the switches (S1, S2) and the balancing switches (SS1, SS2) in a first switching phase (P1), to close the switches (S1, S2) and to open the balancing switches (SS1, SS2) in a second switching phase (P2) following the first switching phase (P1), to open both the switches (S1, S2) and the balancing switches (SS1, SS2) in a third switching phase (P3) following the second switching phase (P2), and to open the switches (S1, S2) and to close the balancing switches (SS1, SS2) in a fourth switching phase (P4) following the third switching phase (P3) in order to transfer energy (E1, E2) from an input terminal pair (A1, B1, A2, B2) having an intermediate circuit voltage (UC1) via the associated transformer (T1, T2) to the output capacitance (Ca) and from the output capacitance (Ca) to at least one input terminal pair (A1, B1, A2, B2) having a lower intermediate circuit voltage.

2. Switched-mode power supply (SNT) according to claim 1, **characterized in that** the switched-mode power supply (SNT) comprises a first circuit part (SNT1) of the plurality of circuit parts (SNT1, SNT2) which has a first transformer (T1) of the plurality of transformers (T1, T2) that are provided in a circuit part (SNT1, SNT2) and a first input terminal pair (A1, B1) of the plurality of input terminal pairs (A1, B1, A2, B2), as well as a second circuit part (SNT2) of the plurality of circuit parts (SNT1, SNT2) which has a second transformer (T2) of the plurality of transformers (T1, T2) that are provided in a circuit part (SNT1, SNT2) and a second input terminal pair (A2, B2) of the plurality of input terminal pairs (A1, B1, A2, B2), wherein the first circuit part (SNT1) is connectable on the input side via the first input terminal pair (A1, B1) to a first intermediate circuit capacitor (C1) exhibiting a first intermediate circuit voltage (UC1), and the second circuit part (SNT2) is connectable on the input side via the second input terminal pair (A2, B2) to a second intermediate circuit capacitor (C2) exhibiting a second intermediate circuit voltage (UC2), wherein the first circuit part (SNT1) is designed to transfer energy (E1) from the first input terminal pair (A1, B1) to a primary winding (L11) of the first transformer (T1) and vice versa, and wherein the second circuit part (SNT2) is designed to transfer energy (E2) from the second input terminal pair (A2, B2) to a primary winding (L21) of the second transformer (T2) and vice versa, **and in that** a secondary winding (L12) of the first transformer (T1) as well as a secondary winding (L22) of the second transformer (T2) are connected to the output capacitor (Ca) in order to transfer energy (E1) from the first input terminal pair (A1, B1) via the first transformer (T1) to the output capacitance (Ca) and from the output capacitance (Ca) to the second input terminal pair (A2, B2) when a first intermediate circuit voltage (UC1) is greater than the second intermediate circuit voltage (UC2), and to transfer energy (E2) from the second input terminal pair (A2, B2) via the second transformer (T2) to the output capacitance (Ca) and from the output capacitance (Ca) to the first input terminal pair (A1, B1) when a second intermediate circuit voltage (UC2) is greater than the first intermediate circuit voltage (UC1).

3. Switched-mode power supply (SNT) according to claim 2,
**characterized in that** a first terminal connection of the secondary winding (L12) of the first transformer (T1) is connected to the second output terminal (D) via a first balancing switch (SS1) of the balancing switches (SS1, SS2) for connecting a corresponding first terminal connection of the secondary windings (L12, L22) of the transformers (T1, T2) to the second output terminal (D), and a first terminal connection of the secondary winding (L22) of the second transformer (T2) is connected to the second output terminal (D) via a second balancing switch (SS2) of the balancing switches (SS1, SS2) for connecting a corresponding first terminal connection of the secondary windings (L12, L22) of the transformers (T1, T2) to the second output terminal (D), **in that** a second terminal connection of the secondary winding (L12) of the first transformer (T1) and a second terminal connection of the secondary winding (L22) of the second transformer (T2) are connected to the first output terminal (C), **and in that** a control unit (1) is provided which is designed to control the first and the second balancing switch (SS1, SS2) in order to transfer energy (E1) from the first input terminal pair (A1, B1) via the first transformer (T1) to the output capacitance (Ca) and from the output capacitance (Ca) to the second input terminal pair (A2, B2) when a first intermediate circuit voltage (UC1) is greater than the second intermediate circuit voltage (UC2), and to transfer energy (E2) from the second input terminal pair (A2, B2) via the second transformer (T2) to the output capacitance (Ca) and from the output capacitance (Ca) to the first input terminal pair (A1, B1) when a second intermediate circuit voltage (UC2) is greater than the first intermediate circuit voltage (UC1).

4. Switched-mode power supply (SNT) according to any of claims 1 to 3, **characterized in that** the input terminal pairs (A1, B1, A2, B2) are connected in series.

5. Switched-mode power supply (SNT) according to any of claims 1 to 4, **characterized in that** the switched-mode power supply (SNT) is designed as a flyback converter.

6. Arrangement consisting of an electronic power device comprising a plurality of intermediate circuit capacitors (C1, C2), each connected to the input terminal pairs (A1, B1, A2, B2) of a switched-mode power supply (SNT) according to any of claims 1 to 5, for balancing intermediate circuit voltages (UC1, UC2) present to the plurality of intermediate circuit capacitors (C1, C2).

7. Method for balancing a plurality of intermediate circuit voltages (UC1, UC2), each of which is present at an intermediate circuit capacitor (C1, C2) of an intermediate circuit arranged between an associated input terminal pair (A1, B1, A2, B2) of a switched-mode power supply (SNT), wherein an output voltage (Ua) is output at an output capacitor (Ca) of the switched-mode power supply (SNT) between a first output terminal (C) and a second output terminal (D) of the switched-mode power supply (SNT), **characterized in that** energy (E1, E2) is transformed from the intermediate circuit capacitor (C1, C2) having an intermediate circuit voltage (UC1, UC2) to a secondary winding (L12, L22) of the associated transformer (T1, T2) and transferred to an output capacitance (Ca) via a primary winding (L11, L12) of an associated transformer (T1, T2) of a corresponding circuit part (SNT1, SNT2), wherein the transformers (T1, T2) are not inductively coupled to one another between the different circuit parts (SNT1, SNT2), and energy (E1, E2) is transferred from the output capacitance (Ca) to the other intermediate circuit capacitor or the other other intermediate circuit capacitors (C1, C2) having a lower intermediate circuit voltage by the energy (E1, E2) being transferred to secondary windings (L2) of the other intermediate circuit capacitor(s) (C1, C2) via transformers (T2) of the switched-mode power supply (SNT) associated with a lower intermediate circuit voltage, transformed in each case to a primary winding (L21) of the other transformers (T2) and transferred to the associated intermediate circuit capacitor (UC1, UC2), **in that,** in each case, in the circuit parts (SNT1, SNT2) the primary winding (L11, L21) of the associated transformer (T1, T2) is connected in parallel to an associated diode (D1, D2), wherein the diodes (D1, D2) are each connected in series to an associated switch (S1) between the associated input terminal pair (A1, B1), **in that** the switch (S1) and balancing switches (SS1, SS2) which are arranged in each case between a first terminal connection of the secondary winding (L12, L22) of the transformers (T1, T2) and the first output terminal (C) are controlled in successive switching phases (P1, P2, P3, P4), by both the switches (S1, S2) and the balancing switches (SS1, SS2) being opened in a first switching phase (P1), the switches (S1, S2) being closed and the balancing switches (SS1, SS2) being opened in a second switching phase (P2) following the first switching phase (P1), both the switches (S1, S2) and the balancing switches (SS1, SS2) being opened in a third switching phase (P3) following the second switching phase (P2), and the switches (S1, S2) being opened and the balancing switches (SS1, SS2) being closed in a fourth switching phase (P4) following the third switching phase (P3) in order to transfer energy (E1, E2) from an input terminal pair (A1, B1, A2, B2) having an intermediate circuit voltage (UC1) via the associated transformer (T1, T2) to the output capacitance (Ca) and from the output capacitance (Ca) to at least one input terminal pair (A1, B1, A2, B2) having a lower intermediate circuit voltage, **and in that,** in an energy annihilation circuit of the corresponding circuit part (SNT1, SNT2) connected in series to the diodes (D1, D2), residual energy stored in a stray inductance of the associated transformer (T1, T2) is annihilated.

8. Method according to claim 7, **characterized in that** a first intermediate circuit voltage (UC1) at a first intermediate circuit capacitor (C1) arranged between a first input terminal pair (A1, B1) of the input terminal pairs (A1, B1, A2, B2) of the switched-mode power supply (SNT) and a second intermediate circuit voltage (UC2) at a second intermediate circuit capacitor (C2) arranged between a second input terminal pair (A2, B2) of the input terminal pairs (A1, B1, A2, B2) of the switched-mode power supply (SNT) are balanced by way of
energy (E1) being transformed from the first intermediate circuit capacitor (C1) via a first primary winding (L11) of a first transformer (T1) to a secondary winding (L12) of the first transformer (T1) and transferred from the secondary winding (L12) of the first transformer (T1) to an output capacitance (Ca) when a first intermediate circuit voltage (UC1) is greater than the second intermediate circuit voltage (UC2) and energy (E2) being transferred from the output capacitance (Ca) to a secondary winding (L2) of a second transformer (T2) of the switched-mode power supply (SNT) and transformed from the secondary winding (L2) of the second transformer (T2) to a primary winding (L21) of the second transformer (T2) and transferred from the primary winding (L21) of the second transformer (T2) to the second intermediate circuit capacitor (U2), or
energy (E2) being transformed from the second intermediate circuit capacitor (C2) via the primary winding (L21) of the second transformer (T2) to the secondary winding (L22) of the second transformer (T2) and transferred from the secondary winding (L22) of the second transformer (T2) to the output capacitance (Ca) when a second intermediate circuit voltage (UC2) is greater than the first intermediate circuit voltage (UC1) and energy (E1) being transferred from the output capacitance (Ca) to the secondary winding (L12) of the first transformer (T1) and transformed from the secondary winding (L21) of the first transformer (T1) to the primary winding (L11) of the first transformer (T1) and transferred from the primary winding (L11) of the first transformer (T1) to the first intermediate circuit capacitor (UC1).

9. Method according to claim 8, **characterized in that** a first balancing switch (SS1) of the balancing switches (SS1, SS2) arranged in each case between a first terminal connection of the secondary winding (L12, L22) of the transformers (T1, T2) and the second output terminal (D), which first balancing switch is arranged between a first terminal connection of the secondary winding (L12) of the first transformer (T1) and the second output terminal (D), is switched, and a second balancing switch (SS2) of the balancing switches (SS1, SS2) arranged in each case between a first terminal connection of the secondary winding (L12, L22) of the transformers (T1, T2) and the second output terminal (D), which second balancing switch is arranged between a first terminal connection of the secondary winding (L22) of the second transformer (T2) and the second output terminal (D), is switched, in order to transfer energy (E1) from the first intermediate circuit capacitor (C1) via the first transformer (T1) to the output capacitance (Ca) and to transfer energy (E2) from the output capacitance (Ca) to the second intermediate circuit voltage (U2) when a first intermediate circuit voltage (UC1) is greater than the second intermediate circuit voltage (UC2), and in order to transfer energy (E2) from the second intermediate circuit capacitor (C2) via the second transformer (T2) to the output capacitance (Ca) and to transfer energy (E1) from the output capacitance (Ca) to the first intermediate circuit voltage (UC1) when a second intermediate circuit voltage (UC2) is greater than the first intermediate circuit voltage (UC1).

## Revendications

1. Alimentation à découpage (SNT) permettant d'équilibrer une pluralité de tensions de circuit intermédiaire (UC1, UC2) pouvant être appliquées respectivement entre une paire de pôles d'entrée (A1, B1, A2, B2) de l'alimentation à découpage (SNT) à un condensateur de circuit intermédiaire (C1, C2) d'un circuit intermédiaire, dans laquelle l'alimentation à découpage (SNT) est configurée pour délivrer une tension continue de sortie (Ua) à un condensateur de sortie (Ca) de l'alimentation à découpage (SNT) connecté entre un premier pôle de sortie (C) et un second pôle de sortie (D) de l'alimentation à découpage (SNT), **caractérisée en ce que** l'alimentation à découpage (SNT) comprend, pour chaque paire de pôles d'entrée (A1, B1, A2, B2) présentant respectivement une tension de circuit intermédiaire (UC1, UC2), une partie de circuit (SNT1, SNT2) comportant respectivement un transformateur (T1, T2), dans laquelle les transformateurs (T1, T2) ne sont pas couplés par induction entre eux entre les différentes parties de circuit (SNT1, SNT2), et dans laquelle les paires de pôles d'entrée (A1, B1, A2, B2) des parties de circuit (SNT1, SNT2) peuvent être respectivement connectées au condensateur de circuit intermédiaire (C1, C2) présentant la tension de circuit intermédiaire (UC1, UC2) et fournissant la tension de circuit intermédiaire (UC1, UC2) et les parties de circuit (SNT1, SNT2) sont configurées pour charger de l'énergie (E1, E2) par l'intermédiaire des paires de pôles d'entrée (A1, B1, A2, B2) dans un enroulement primaire (L11, L21) du transformateur (T1, T2) correspondant et inversement, **que** des enroulements secondaires (L12, L22) des transformateurs (T1, T2) sont respectivement connectés au condensateur de sortie (Ca), **que** respectivement une première borne des enroulements secondaires (L12, L22) des transformateurs (T1, T2) est connectée au second pôle de sortie (D) par l'intermédiaire d'un commutateur d'équilibrage (SS1, SS2), **que** respectivement une seconde borne des enroulements secondaires (L12, L22) des transformateurs (T1, T2) est connectée au premier pôle de sortie (C), **que,** dans les parties de circuit (SNT1, SNT2), l'enroulement primaire (L11, L21) du transformateur (T1, T2) associé est respectivement monté en parallèle sur une diode (D1, D2) associée, dans laquelle les diodes (D1, D2) sont respectivement montées en série avec un commutateur (S1, S2) associé entre la paire de pôles d'entrée (A1, B1) associée, **que,** dans chaque partie de circuit (SNT1, SNT2), un circuit de dissipation d'énergie respectif est monté en série avec les diodes (D1, D2) afin de dissiper l'énergie résiduelle stockée dans une inductance de fuite du transformateur (T1) associé, **et qu'**une unité de commande (1) est prévue, laquelle est configurée pour commander les commutateurs d'équilibrage (SS1, SS2) et les commutateurs (S1, S2) dans des phases de commutation (P1, P2, P3, P4) successives et, dans une première phase de commutation (P1), pour ouvrir aussi bien les commutateurs (S1, S2) que les commutateurs d'équilibrage (SS1, SS2), dans une deuxième phase de commutation (P2) suivant la première phase de commutation (P1), pour fermer les commutateurs (S1, S2) et ouvrir les commutateurs d'équilibrage (SS1, SS2), dans une troisième phase de commutation (P3) suivant la deuxième phase de commutation (P2), pour ouvrir aussi bien les commutateurs (S1, S2) que les commutateurs d'équilibrage (SS1, SS2) et, dans une quatrième phase de commutation (P4) suivant la troisième phase de commutation (P3), pour ouvrir les commutateurs (S1, S2) et fermer les commutateurs d'équilibrage (SS1, SS2) afin de transférer de l'énergie (E1, E2) d'une paire de pôles d'entrée (A1, B1, A2, B2) avec une tension de circuit intermédiaire (UC1) à la capacité de sortie (Ca) par l'intermédiaire du transformateur (T1, T2) associé et de la capacité de sortie (Ca) à au moins une paire de pôles d'entrée (A1, B1, A2, B2) avec une tension de circuit intermédiaire plus faible.

2. Alimentation à découpage (SNT) selon la revendication 1,
**caractérisée en ce que** l'alimentation à découpage (SNT) comprend une première partie de circuit (SNT1) de la pluralité de parties de circuit (SNT1, SNT2) comportant un premier transformateur (T1) de la pluralité de transformateurs (T1, T2) prévus dans une partie de circuit (SNT1, SNT2) et une première paire de pôles d'entrée (A1, B1) de la pluralité de paires de pôles d'entrée (A1, B1, A2, B2), ainsi qu'une seconde partie de circuit (SNT2) de la pluralité de parties de circuit (SNT1, SNT2) comportant un second transformateur (T2) de la pluralité de transformateurs (T1, T2) prévus dans une partie de circuit (SNT1, SNT2) et une seconde paire de pôles d'entrée (A2, B2) de la pluralité de paires de pôles d'entrée (A1, B1, A2, B2), dans laquelle la première partie de circuit (SNT1) peut être connectée côté entrée, par l'intermédiaire de la première paire de pôles d'entrée (A1, B1), à un premier condensateur de circuit intermédiaire (C1), présentant une première tension de circuit intermédiaire (UC1), et la seconde partie de circuit (SNT2) peut être connectée côté entrée, par l'intermédiaire de la seconde paire de pôles d'entrée (A2, B2), à un second condensateur de circuit intermédiaire (C2), présentant une seconde tension de circuit intermédiaire (UC2), dans laquelle la première partie de circuit (SNT1) est configurée pour transférer de l'énergie (E1) provenant de la première paire de pôles d'entrée (A1, B1) dans un enroulement primaire (L11) du premier transformateur (T1) et inversement, et dans laquelle la seconde partie de circuit (SNT2) est configurée pour transférer de l'énergie (E2) provenant de la seconde paire de pôles d'entrée (A2, B2) dans un enroulement primaire (L21) du second transformateur (T2) et inversement, **et qu**'un enroulement secondaire (L12) du premier transformateur (T1) ainsi qu'un enroulement secondaire (L22) du second transformateur (T2) sont connectés au condensateur de sortie (Ca) pour, pour une première tension de circuit intermédiaire (UC1) supérieure à la seconde tension de circuit intermédiaire (UC2), transférer de l'énergie (E1) provenant de la première paire de pôles d'entrée (A1, B1) à la capacité de sortie (Ca) par l'intermédiaire du premier transformateur (T1) et de la capacité de sortie (Ca) dans la seconde paire de pôles d'entrée (A2, B2) et, pour une seconde tension de circuit intermédiaire (UC2) supérieure à la première tension de circuit intermédiaire (UC1), transférer de l'énergie (E2) provenant de la seconde paire de pôles d'entrée (A2, B2) à la capacité de sortie (Ca) par l'intermédiaire du second transformateur (T2) et de la capacité de sortie (Ca) dans la première paire de pôles d'entrée (A1, B1).

3. Alimentation à découpage (SNT) selon la revendication 2,
**caractérisée en ce qu'**une première borne de l'enroulement secondaire (L12) du premier transformateur (T1) est connectée au second pôle de sortie (D) par l'intermédiaire d'un premier commutateur d'équilibrage (SS1), le commutateur d'équilibrage (SS1, SS2) permettant de connecter une première borne respective des enroulements secondaires (L12, L22) des transformateurs (T1, T2) au second pôle de sortie (D), et une première borne de l'enroulement secondaire (L22) du second transformateur (T2) est connectée au second pôle de sortie (D) par l'intermédiaire d'un second commutateur d'équilibrage (SS2), le commutateur d'équilibrage (SS1, SS2) permettant de connecter une première borne respective des enroulements secondaires (L12, L22) des transformateurs (T1, T2) au second pôle de sortie (D), **qu**'une seconde borne de l'enroulement secondaire (L12) du premier transformateur (T1) et une seconde borne de l'enroulement secondaire (L22) du second transformateur (T2) sont connectées au premier pôle de sortie (C), **et qu**'une unité de commande (1) est prévue, laquelle est configurée pour commander le premier et le second commutateur d'équilibrage (SS1, SS2) afin de transférer, pour une première tension de circuit intermédiaire (UC1) supérieure à la seconde tension de circuit intermédiaire (UC2), de l'énergie (E1) provenant de la première paire de pôles d'entrée (A1, B1) à la capacité de sortie (Ca) par l'intermédiaire du premier transformateur (T1) et de la capacité de sortie (Ca) dans la seconde paire de pôles d'entrée (A2, B2), et de, pour une seconde tension de circuit intermédiaire (UC2) supérieure à la première tension de circuit intermédiaire (UC1), transférer de l'énergie (E2) provenant de la seconde paire de pôles d'entrée (A2, B2) à la capacité de sortie (Ca) par l'intermédiaire du second transformateur (T2) et de la capacité de sortie (Ca) dans la première paire de pôles d'entrée (A1, B1).

4. Alimentation à découpage (SNT) selon l'une des revendications 1 à 3, **caractérisée en ce que** les paires de pôles d'entrée (A1, B1, A2, B2) sont montées en série.

5. Alimentation à découpage (SNT) selon l'une des revendications 1 à 4, **caractérisée en ce que** l'alimentation à découpage (SNT) est réalisée sous la forme d'un convertisseur à transfert indirect.

6. Agencement constitué d'un dispositif à électronique de puissance comportant une pluralité de condensateurs de circuit intermédiaire (C1, C2), respectivement connectés aux paires de pôles d'entrée (A1, B1, A2, B2) d'une alimentation à découpage (SNT) selon l'une des revendications 1 à 5, pour l'équilibrage de tensions de circuit intermédiaire (UC1, UC2) appliquées à la pluralité de condensateurs de circuit intermédiaire (C1, C2).

7. Procédé pour l'équilibrage d'une pluralité de tensions de circuit intermédiaire (UC1, UC2) qui sont respectivement appliquées à un condensateur de circuit intermédiaire (C1, C2) d'un circuit intermédiaire disposé entre une paire de pôles d'entrée (A1, B1, A2, B2) associée d'une alimentation à découpage (SNT), dans lequel une tension de sortie (Ua) est délivrée à un condensateur de sortie (Ca) de l'alimentation à découpage (SNT) entre un premier pôle de sortie (C) et un second pôle de sortie (D) de l'alimentation à découpage (SNT),
**caractérisé en ce que** de l'énergie (E1, E2) provenant du condensateur de circuit intermédiaire (C1, C2) avec une tension de circuit intermédiaire (UC1, UC2) est transformée, par l'intermédiaire d'un enroulement primaire (L11, L12) d'un transformateur (T1, T2) associé d'une partie de circuit (SNT1, SNT2) respective, dans lequel les transformateurs (T1, T2) ne sont pas couplés par induction entre eux entre les différentes parties de circuit (SNT1, SNT2), à un enroulement secondaire (L12, L22) du transformateur (T1, T2) associé et est transférée à une capacité de sortie (Ca), et de l'énergie (E1, E2) est transférée de la capacité de sortie (Ca) dans le ou les autres condensateurs de circuit intermédiaire (C1, C2) avec une tension de circuit intermédiaire plus faible, par le fait que l'énergie (E1, E2) provenant du ou des autres condensateurs de circuit intermédiaire (C1, C2) avec une tension de circuit intermédiaire plus faible des transformateurs (T2) de l'alimentation à découpage (SNT) associés est transférée dans des enroulements secondaires (L2), respectivement transformée à un enroulement primaire (L21) des autres transformateurs (T2) et transférée dans le condensateur de circuit intermédiaire (UC1, UC2) associé, **que,** dans les parties de circuit (SNT1, SNT2), l'enroulement primaire (L11, L21) du transformateur (T1, T2) associé est respectivement monté en parallèle avec une diode (D1, D2) associée, dans lequel les diodes (D1, D2) sont respectivement montées en série avec un commutateur (S1) associé entre la paire de pôles d'entrée (A1, B1) associée, **que** les commutateurs (S1) et des commutateurs d'équilibrage (SS1, SS2) disposés respectivement entre une première borne de l'enroulement secondaire (L12, L22) des transformateurs (T1, T2) et le premier pôle de sortie (C) sont commandés dans des phases de commutation (P1, P2, P3, P4) successives, par le fait que, dans une première phase de commutation (P1), aussi bien les commutateurs (S1, S2) que les commutateurs d'équilibrage (SS1, SS2) sont ouverts, dans une deuxième phase de commutation (P2) suivant la première phase de commutation (P1), les commutateurs (S1, S2) sont fermés et les commutateurs d'équilibrage (SS1, SS2) sont ouverts, dans une troisième phase de commutation (P3) suivant la deuxième phase de commutation (P2), aussi bien les commutateurs (S1, S2) que les commutateurs d'équilibrage (SS1, SS2) sont ouverts et, dans une quatrième phase de commutation (P4) suivant la troisième phase de commutation (P3), les commutateurs (S1, S2) sont ouverts et les commutateurs d'équilibrage (SS1, SS2) sont fermés, afin de transférer de l'énergie (E1, E2) provenant d'une paire de pôles d'entrée (A1, B1, A2, B2) avec une tension de circuit intermédiaire (UC1) à la capacité de sortie (Ca) par l'intermédiaire du transformateur (T1, T2) associé et de la capacité de sortie (Ca) à au moins une paire de pôles d'entrée (A1, B1, A2, B2) avec une tension de circuit intermédiaire plus faible, **et que,** dans un circuit de dissipation d'énergie de la partie de circuit (SNT1, SNT2) respective monté en série avec les diodes (D1, D2), l'énergie résiduelle stockée dans une inductance de fuite du transformateur (T1, T2) associé est dissipée.

8. Procédé selon la revendication 7, **caractérisé en ce qu'**une première tension de circuit intermédiaire (UC1) est équilibrée sur un premier condensateur de circuit intermédiaire (C1) disposé situé entre une première paire de pôles d'entrée (A1, B1) des paires de pôles d'entrée (A1, B1, A2, B2) de l'alimentation à découpage (SNT) et une seconde tension de circuit intermédiaire (UC2) est équilibrée sur un second condensateur de circuit intermédiaire (C2) disposé entre une seconde paire de pôles d'entrée (A2, B2) des paires de pôles d'entrée (A1, B1, A2, B2) de l'alimentation à découpage (SNT), par le fait que
pour une première tension de circuit intermédiaire (UC1) supérieure à la seconde tension de circuit intermédiaire (UC2), de l'énergie (E1) provenant du premier condensateur de circuit intermédiaire (C1) est transformée à un enroulement secondaire (L12) d'un premier transformateur (T1) par l'intermédiaire d'un premier enroulement primaire (L11) du premier transformateur (T1) et est transférée de l'enroulement secondaire (L12) du premier transformateur (T1) à une capacité de sortie (Ca), et de l'énergie (E2) est transférée de la capacité de sortie (Ca) dans un enroulement secondaire (L2) d'un second transformateur (T2) de l'alimentation à découpage (SNT) et, depuis l'enroulement secondaire (L2) du second transformateur (T2), est transformée à un enroulement primaire (L21) du second transformateur (T2) et est transférée de l'enroulement primaire (L21) du second transformateur (T2) dans le second condensateur de circuit intermédiaire (U2), ou
pour une seconde tension de circuit intermédiaire (UC2) supérieure à la première tension de circuit intermédiaire (UC1), de l'énergie (E2) provenant du second condensateur de circuit intermédiaire (C2) est transformée à l'enroulement secondaire (L22) du second transformateur (T2) par l'intermédiaire de l'enroulement primaire (L21) du second transformateur (T2) et est transférée de l'enroulement secondaire (L22) du second transformateur (T2) à la capacité de sortie (Ca), et de l'énergie (E1) est transférée de la capacité de sortie (Ca) dans l'enroulement secondaire (L12) du premier transformateur (T1) et, depuis l'enroulement secondaire (L21) du premier transformateur (T1), est transformée à l'enroulement primaire (L11) du premier transformateur (T1) et est transférée de l'enroulement primaire (L11) du premier transformateur (T1) dans le premier condensateur de circuit intermédiaire (UC1).

9. Procédé selon la revendication 8, **caractérisé en ce qu'**un premier commutateur d'équilibrage (SS1) disposé entre une première borne de l'enroulement secondaire (L12) du premier transformateur (T1) et le second pôle de sortie (D) parmi les commutateurs d'équilibrage (SS1, SS2) respectivement disposés entre une première borne de l'enroulement secondaire (L12, L22) des transformateurs (T1, T2) et le second pôle de sortie (D) est commandé, et un second commutateur d'équilibrage (SS2) disposé entre une première borne de l'enroulement secondaire (L22) du second transformateur (T2) et le second pôle de sortie (D) parmi les commutateurs d'équilibrage (SS1, SS2) respectivement disposés entre une première borne de l'enroulement secondaire (L12, L22) des transformateurs (T1, T2) et le second pôle de sortie (D) est commandé afin de transférer, pour une première tension de circuit intermédiaire (UC1) supérieure à la seconde tension de circuit intermédiaire (UC2), de l'énergie (E1) provenant du premier condensateur de circuit intermédiaire (C1) à la capacité de sortie (Ca) par l'intermédiaire du premier transformateur (T1) et de transférer de l'énergie (E2) provenant de la capacité de sortie (Ca) dans la seconde tension de circuit intermédiaire (U2), et de, pour une seconde tension de circuit intermédiaire (UC2) supérieure à la première tension de circuit intermédiaire (UC1), transférer de l'énergie (E2) provenant du second condensateur de circuit intermédiaire (C2) à la capacité de sortie (Ca) par l'intermédiaire du second transformateur (T2) et transférer de l'énergie (E1) provenant de la capacité de sortie (Ca) dans la première tension de circuit intermédiaire (UC1).
